# EUROPEAN PATENT SPECIFICATION

(11) **EP 4 594 932 B1**
(45) Date of publication and mention of the grant of the patent: **04.11.2026**
(21) Application number: 22793751.3
(22) Date of filing: 28.09.2022
(51) Int. Cl.: G06N 3/045, G06N 3/098, G06N 3/082, G06N 3/084, G06N 3/09

(54) **SCHEDULING OF BROADCAST TRANSMISSIONS FOR FULLY DISTRIBUTED ITERATIVE LEARNING**
PLANUNG VON RUNDFUNKÜBERTRAGUNGEN FÜR VOLLSTÄNDIG VERTEILTES ITERATIVES LERNEN
PLANIFICATION DE TRANSMISSIONS DE DIFFUSION POUR UN APPRENTISSAGE ITÉRATIF ENTIÈREMENT DISTRIBUÉ

(43) Date of publication of application: 06.08.2025
(73) Proprietor: Telefonaktiebolaget LM Ericsson (publ), 164 83 Stockholm (SE)
(72) Inventor: RYDÉN, Henrik, 117 27 Stockholm (SE); MOOSAVI, Reza, 583 33 Linköping (SE); LARSSON, Erik, G., 586 63 Linköping (SE); CHEN, Zheng, 602 16 Norrköping (SE); PEREZ HERRERA, Daniel, 583 28 Linköping (SE)
(74) Representative: Ericsson
(86) International application number: PCT/EP2022/076969
(87) International publication number: WO 2024/067961

(56) References cited:
- SAVAZZI STEFANO ET AL: "A Joint Decentralized Federated Learning and Communications Framework for Industrial Networks", 2020 IEEE 25TH INTERNATIONAL WORKSHOP ON COMPUTER AIDED MODELING AND DESIGN OF COMMUNICATION LINKS AND NETWORKS (CAMAD), IEEE, 14 September 2020 (2020-09-14), pages 1 - 7, XP033833143, DOI: 10.1109/CAMAD50429.2020.9209305
- CHUNG-HSUAN HU ET AL: "Device Scheduling and Update Aggregation Policies for Asynchronous Federated Learning", ARXIV.ORG, CORNELL UNIVERSITY LIBRARY, 201 OLIN LIBRARY CORNELL UNIVERSITY ITHACA, NY 14853, 23 July 2021 (2021-07-23), XP091016084

## Description

### TECHNICAL FIELD

A method, a coordinator entity, a computer program, and a computer program product for selecting agent entities to broadcast local model parameter vectors in an iterative learning process are presented herein. A method, an agent, a computer program, and a computer program product for the agent entity to perform the iterative learning process are further presented herein.

### BACKGROUND

The increasing concerns for data privacy have motivated the consideration of collaborative machine learning (ML) systems with decentralized data where pieces of training data are stored and processed locally by edge user devices, such as mobile phones, smart devices, cameras in a network, or other types of sensors. Such edge user devices are in the present context referred to as agent entities. Several new distributed algorithms are being developed with which autonomous agent entities collaboratively solve large- scale inference and learning tasks.

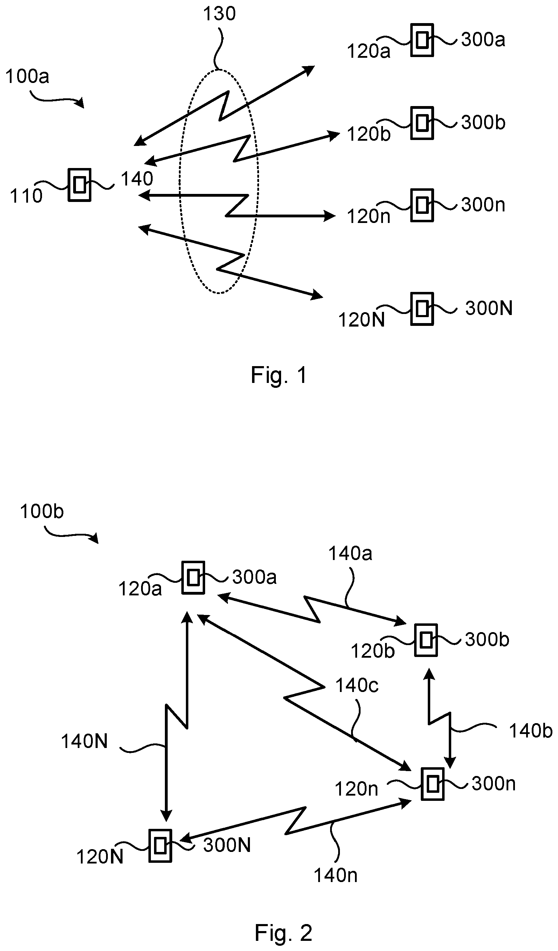

This is in contrast to a federated learning (FL) setup where a number of agent entities participate in the training of an ML model residing in a parameter server. In general terms, FL might be regarded as an ML technique that trains an ML (or artificial intelligence; Al) model across multiple decentralized agent entities, each performing local model training using local data samples. The technique requires multiple interactions of the model, but no exchange of local data samples. This is illustrated in Fig. 1. **Fig. 1** is a schematic diagram illustrating a communication network 100a. The communication network 100a could be a third generation (3G) telecommunications network, a fourth generation (4G) telecommunications network, a fifth (5G) telecommunications network, a sixth (6G) telecommunications network, and support any 3GPP telecommunications standard. The communication network 100a comprises a parameter server 140 and *N* agent entities 300a, 300b, 300n, 300N. The parameter server 140 might be provided in a network node 110. Examples of network nodes 110 are (radio) access network nodes, radio base stations, base transceiver stations, Node Bs (NBs), evolved Node Bs (eNBs), gNBs, access points, access nodes, and integrated access and backhaul nodes. Each of the agent entities 300a:300N might be provided in a respective user equipment 120a, 120b, 120n, 120N. Examples of user equipment 120a:120N are wireless devices, mobile stations, mobile phones, handsets, wireless local loop phones, smartphones, laptop computers, tablet computers, network equipped sensors, network equipped vehicles, and so-called Internet of Things devices. The agent entities 300a:300N communicate with the parameter server 140 over wireless links 130 established between the network node 110 and the user equipment 120a:120N. Here each agent has its own local training data but does not share this data with the parameter server. Instead, only updates to the model are shared, and subsequently aggregated by the server. In further details, FL is an iterative process where each global iteration, often referred to as iteration round, is divided into three phases: In a first phase the PS sends the current model parameter vector to all participating agent entities 300a:300N. In a second phase each of the agent entities 300a:300N performs one or several steps of a stochastic gradient descent (SGD) procedure on its own training data based on the current model parameter vector and obtains a model update. In a third phase the model updates from all agent entities 300a:300N are sent to the PS, which aggregates the received model updates and updates the parameter vector for the next iteration based on the model updates according to some aggregation rule. The first phase is then entered again but with the updated parameter vector as the current model parameter vector.

However, there could be some scenarios where a centralized parameter server is unavailable or where, for other reasons, the use of a centralized parameter server could, or should, be avoided. This requires all agent entities 300a:300N to have their own instance of the learning model. Similar to in the FL setup, each agent has its own private training data. The agent entities 300a:300N are operatively connected to each other according to a connectivity graph, such that each agent has a number of neighboring agent entities 300a:300N. This is illustrated in Fig. 2. **Fig. 2** is a schematic diagram illustrating a communication network 100b similar to communication network 100a but where the network node 110 has been removed and where the agent entities 300a:300N communicate with each other over wireless links 140a, 140b, 140c, 140n, 140N established between the user equipment 120a:120N. The training proceeds by the agent entities 300a:300N exchanging updates between each other.

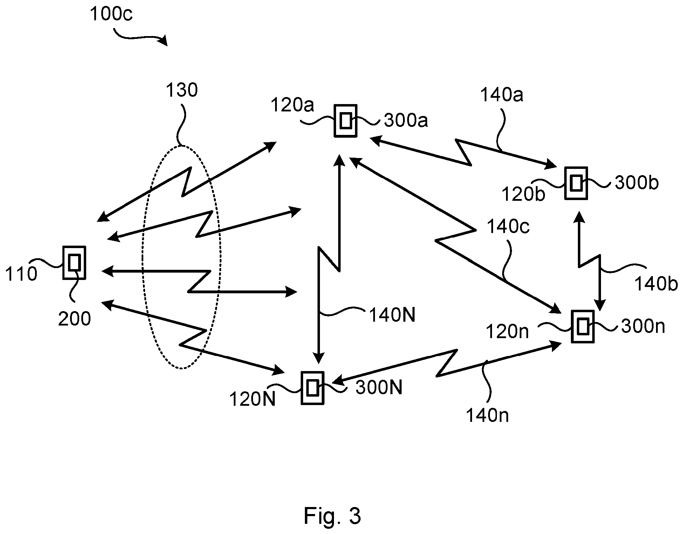

In further examples, a central authority (CA), hereinafter referred to as a coordinator entity, is configured to coordinate the learning activity among the agent entities 300a:300N. This is illustrated in Fig. 3. **Fig. 3** is a schematic diagram illustrating a communication network 100c similar to communication network 100b but where the network node 110 has been reintroduced. However, in contast to the communication network 100a, the network node 110 is provided with a coordinator entity 200, not a parameter server 140. The agent entities 300a:300N communicate with each other over wireless links 140a, 140b, 140c, 140n, 140N established between the user equipment 120a:120N. The agent entities 300a:300N also communicate with the coordinator entity 200 over wireless links 130 established between the network node 110 and the user equipment 120a:120N. This could represent a scenario where the communication links between the agent entities 300a:300N have high capacity (e.g. facilitated by millimeter wave or Terahertz communications) whereas the communication links between the agent entities 300a:300N and the CA have small bandwidth (e.g. facilitated through a sub-6 GHz cellular network or similar). This could be the case where the agent entities 300a:300N are distributed among several cells in a cellular network, and/or where the agent entities 300a:300N are phycally very close to each other. In such scenarios, it is desirable to carry out the model update communication via device-to-device links between the agent entities 300a:300N and use the connections to the CA only to coordinate the transmissions and for control signaling. In short, one itertion of the iterative process might encompass the following actions. Firstly, the agent entities 300a:300N broadcast their current estimate of the learning model to their neighboring agent entities 300a:300N. Secondly, each agent performs a consensus update, substantially averaging its own local model estimate with those received from its neighboring agent entities 300a:300N. Thirdly, each agent computes a local model update, based on its own private training data. This takes place, for example, using standard stochastic gradient optimization methods. Subsequently, each agent updates its model parameter estimate by adding this model update. Each round these actions might be referred to as a global iteration (to differentiate between iterations performed by each agent within one such global iteration). Several global iterations are performed sequentially, until a convergence criterion is met.

Each global iteration requires every agent to broadcast its model parameter vector to its neighboring agent entities 300a:300N. This is resource-inefficient. Even if assuming that interference from concurrent transmissions were to be avoided completely, the amount of radio resources needed per global iteration would scale proportionally to the number of agent entities 300a:300N.

Hence, there is still a need for an improved iterative learning process.

SAVAZZI STEFANO ET AL: "A Joint Decentralized Federated Learning and Communications Framework for Industrial Networks" propose a real-time framework for the analysis of decentralized FL systems running on top of industrial wireless networks rooted in the popular Time Slotted Channel Hopping (TSCH) radio interface of the IEEE 802.15.4e standard.

CHUNG-HSUAN HU ET AL: "Device Scheduling and Update Aggregation Policies for Asynchronous Federated Learning" propose an asynchronous FL framework with periodic aggregation to eliminate the straggler issue in FL systems and investigate several device scheduling and update aggregation policies.

### SUMMARY

An object of embodiments herein is to address the above issues.

According to a first aspect there is presented a method according to claim 1 for selecting agent entities to broadcast local mode parameter vectors in an iterative learning process. The method is performed by a coordinator entity. The iterative learning process pertains to a computational task to be performed by *N* agent entities for training a machine learning model. For each iteration round of the iterative learning process, a local model parameter vector with locally computed computational results is computed per each of the *N* agent entities based on its own local training data and at least one local model parameter vector received from at least one other of the agent entities. The locally computed computational results are updates of the machine learning model. For each iteration round of the iterative learning process less than all of the *N* agent entities are to broadcast their local model parameter vector. The method, for each iteration of the iterative learning process, comprises obtaining parameters from the agent entities. The parameters pertain to a utility for each of the agent entities to broadcast its local model parameter vector for the iteration. The method, for each iteration of the iterative learning process, comprises selecting *K* < *N* agent entities to broadcast their local model parameter vector for the iteration by applying a selection criterion to the obtained parameters. The method, for each iteration of the iterative learning process, comprises sending information that informs the *N* agent entities of the selected *K* agent entities.

According to a second aspect there is presented a coordinator entity according to claim 12 for selecting agent entities to broadcast loca model parameter vectors in an iterative learning process. The iterative learning process pertains to a computational task to be performed by *N* agent entities for training a machine learning model. For each iteration round of the iterative learning process, a local model parameter vector with locally computed computational results is computed per each of the *N* agent entities based on its own local training data and at least one local model parameter vector received from at least one other of the agent entities. The locally computed computational results are updates of the machine learning model. For each iteration round of the iterative learning process less than all of the *N* agent entities are to broadcast their local model parameter vector. The coordinator entity comprises processing circuitry. The processing circuitry is configured to cause the coordinator entity to, for each iteration of the iterative learning process obtain parameters from the agent entities. The parameters pertain to a utility for each of the agent entities to broadcast its local model parameter vector for the iteration. The processing circuitry is configured to cause the coordinator entity to, for each iteration of the iterative learning process select *K < N* agent entities to broadcast their local model parameter vector for the iteration by applying a selection criterion to the obtained parameters. The processing circuitry is configured to cause the coordinator entity to, for each iteration of the iterative learning process send information that informs the *N* agent entities of the selected *K* agent entities.

According to a third aspect there is presented a method for performing an iterative learning process according to claim 7. The method is performed by an agent entity. The iterative learning process pertains to a computational task to be performed by the agent entity for training a machine learning model. For each iteration round of the iterative learning process, a local model parameter vector with locally computed computational results is computed by the agent entity based on its own local training data and local model parameter vectors received from other agent entities. The locally computed computational results are updates of the machine learning model. Fr each iteration round of the iterative learning process the agent entity is only to broadcast its local model parameter vector when informed to do so. The method, for each iteration of the iterative learning process, comprises providing parameters to a coordinator entity. The parameters pertain to a utility for the agent entity to broadcast its local model parameter vector for the iteration. The method, for each iteration of the iterative learning process, comprises receiving information from the coordinator entity that informs the agent entity of which *K* agent entities that have been selected to broadcast their local model parameter vector for the iteration. The method, for each iteration of the iterative learning process, comprises broabdcasting the local model parameter vector only when the agent entity is one of the selected *K* agent entities.

According to a fourth aspect there is presented an agent entity for performing an iterative learning process according to claim 14. The iterative learning process pertains to a computational task to be performed by the agent entity for training a machine learning model. For each iteration round of the iterative learning process, a local model parameter vector with locally computed computational results is computed by the agent entity based on its own local training data and local model parameter vectors received from other agent entities. The locally computed computational results are updates of the machine learning model, For each iteration round of the iterative learning process the agent entity is only to broadcast its local model parameter vector when informed to do so. The agent entity comprises processing circuitry. The processing circuitry being configured to cause the agent entity to, for each iteration of the iterative learning process provide parameters to a coordinator entity. The parameters pertain to a utility for the agent entity to broadcast its local model parameter vector for the iteration. The processing circuitry being configured to cause the agent entity to, for each iteration of the iterative learning process receive information from the coordinator entity that informs the agent entity of which *K* agent entities that have been selected to broadcast their local model parameter vector for the iteration. The processing circuitry being configured to cause the agent entity to, for each iteration of the iterative learning process broabdcast the local model parameter vector only when the agent entity is one of the selected *K* agent entities.

Advantageously, these aspects do not cause the iterative learning process to suffer from the above disclosed issues.

Advantageously, these aspects result in improved radio resource utilization and improved energy efficiency of distributed learning systems.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Figs. 1 , 2, and 3 are schematic diagrams illustrating a communication network according to embodiments;
Figs. 4 and 5 are flowcharts of methods according to embodiments;
Fig. 6 is a schematic illustration of a connectivity graph according to embodiments;
Fig. 7 show simulation results according to embodiments;
Fig. 8 is a schematic diagram showing functional units of a coordinator entity according to an embodiment;
Fig. 9 is a schematic diagram showing functional modules of a coordinator entity according to an embodiment;
Fig. 10 is a schematic diagram showing functional units of an agent entity according to an embodiment;
Fig. 11 is a schematic diagram showing functional modules of an agent entity according to an embodiment;
Fig. 12 shows one example of a computer program product comprising computer readable means according to an embodiment;
Fig. 13 is a schematic diagram illustrating a telecommunication network connected via an intermediate network to a host computer in accordance with some embodiments; and
Fig. 14 is a schematic diagram illustrating host computer communicating via a radio base station with a terminal device over a partially wireless connection in accordance with some embodiments.

### DETAILED DESCRIPTION

The inventive concept will now be described more fully hereinafter with reference to the accompanying drawings, in which certain embodiments of the inventive concept are shown. Like numbers refer to like elements throughout the description. Any step or feature illustrated by dashed lines should be regarded as optional.

The embodiments disclosed herein relate to techniques for selecting agent entities 300a:300N to broadcast local model parameter vectors in an iterative learning process. In order to obtain such techniques there is provided a coordinator entity 200, a method performed by the coordinator entity 200, a computer program product comprising code, for example in the form of a computer program, that when run on processing circuitry of the coordinator entity 200, causes the coordinator entity 200 to perform the method. The embodiments disclosed herein further relate to techniques for performing an iterative learning process. In order to obtain such techniques there is provided an agent entity 300n, a method performed by the agent entity 300n, and a computer program product comprising code, for example in the form of a computer program, that when run on processing circuitry of the agent entity 300n, causes the agent entity 300n to perform the method.

For clarification, according to aspects of the present disclosure, when herein referring to an agent, what is considered is an agent implemented by means of software executable on, or by, any agent entity 300n. At least some of the herein disclosed embodiments provide a resource-efficient communication protocol for decentralized machine learning systems based on using agent entities 300a:300N enabled to wirelessly communicate with a set of neighboring agent entities 300a:300N. The communication takes place in the form of broadcast, which means that the message from a broadcasting agent can be received by any other agent within its communication range (e.g., as defined by a connectivity graph). This stands largely in contrast to classical gossip algorithms with pair-wise averaging, where the communication is assumed to take place between a pair of agent entities 300a:300N at each time instant.

In further detail, at least some of the herein disclosed embodiments are based on that, in each global iteration, only select a subset of agent entities 300a:300N that should broadcast their local model parameter vector. One motivation is that it has been discovered by the inventors in experiments that the learning iterations converge faster if only a carefully selected subset of agent entities 300a:300N perform this broadcast.

In some non-limiting examples, in each global iteration, a metric is computed for a number of possible subsets of agent entities 300a:300N that could be selected for broadcast in that iteration. The subset with the best associated metric is then instructed to perform the broadcast. The actual distributed learning might leverage model updating techniques (such as stochastic gradient descent techniques) and consensus averaging techniques which are known as such in the art. The consensus techniques might comprise means to compensate for missing data, such as the balanced compensation method, or similar.

In some aspects, there is assumed a fully distributed learning setup with *N* agent entities 300a:300N and one central authority (CA), as defined by the coordinator entity 200. Each agent has its own local dataset, and the objective is to collaboratively train a machine learning model parameterized by a vector *z*. This collaborative training takes place by exchanging information among the agent entities 300a:300N. Specifically, if *fₙ*(*z*) denotes the local objective function at agent *n* (where *fₙ* thus depends on the local data at agent *n),* then the objectives are to learn the vector *z*, say *z**, that minimizes a cost function (such as an error vector), or maximizes a utility fuction, given as ∑*ₙfₙ*(*z*) with respect to z, whilst ensuring that all agent entities 300a:300N obtain that optimal vector *z**.

In some aspects, it is assumed that not all agent entities 300a:300N have a high-bandwidth operative connection to the coordinator entity 200, for example through a cellular or satellite network. The operative connections to the coordinator entity 200 might offer insufficient bandwidth, or consumes intolerable amount of energy, for the communication of model updates. Also, the set of agent entities 300a:300N might want to avoid sending a model to a central authority of another vendor, and for example only share the model within the same device vendor. The exchange of model updates for the model training therefore takes place over broadcast between the agent entities 300a:300N themselves. In some aspects, this implies that the agent entities 300a:300N can receive broadcast transmissions from other agent entities 300a:300N according to a connectivity graph *G*. The connectivity graph changes only slowly with time and is assumed here to be known at least to the coordinator entity 200 and possibly also to some, or even all, agent entities 300a:300N.

In som examples, the agent entities 300a:300N are operatively connected to each other via technologies such as new radio (NR) sidelinks, Bluetooth or the IEEE 802.11 family of standards (commonly referred to as Wi-Fi). The operative connections between the agent entities 300a:300N might provide very high bitrates, for example if operating at millimeter wave or Terahertz frequencies. Yet, for privacy reasons, the agent entities 300a:300N might be configured to not share raw data with one another (or with the coordinator entity 200) so communication between agent entities 300a:300N might be restricted to local updates to the model.

As an introductory example, assume a scenario with distributed learning where a consensus averaging mechanism is using device-to-device communication between the agent entities 300a:300N for the model updates where the object is used to find z*. Each agent is assumed to keep track of a local estimate of the model, denoted by *zₙ* for agent *n*. The distributed learning then proceeds by repeatedly performing the following steps.

S1: Each of the *N* agent entities 300a:300N broadcasts its current model parameter estimate, *zₙ*, to its neighboring agent entities 300a:300N (e.g., as defined by *G*).

S2: Each agent performs a consensus update, ${z}_{n} : = {\sum }_{i = neighbors \left(n\right)} {w}_{ni} {z}_{i} ,$ where {*wₙᵢ*} is a set of pre-determined weights, and where the set of neighboring agent entities 300a:300N might, optionally, include the value of node *n* itself, *zₙ*. The matrix *W* formed by assembling these weights into an *N* × *N* array is typically taken as *W = I - eL* where e is a positive constant and *L* is the Laplacian matrix associated with the graph *G*.

S3: Based on its local training data, each agent *n* computes a local model update, which is added to *zₙ*. In some non-limiting examples, stochastic gradient descent is used to compute the local model updates. The learning algorithm then becomes decentralized stochastic gradient descent (DSGD). In this case, the detailed update is ${z}_{n} : = {z}_{n} - γ ∇ {f}_{n} \left(z\right) \left|{z}_{n}\right.$ where *γ* is a constant and V denotes the gradient operator; ∇*fₙ*(z)|zₙ denotes the gradient of *f*_{*n*(.)} with respect to *z* evaluated at *zₙ*.

The execution of one occurrence of steps S1, S2, and S3 can be referred to as one global iteration, whereas each agent might execute steps of a local iteration for compuing its local model update in step S3. Performing many such global iterations leads to consensus of the optimal parameter vector. That is, the algorithm converges eventually such that *zₙ* = *z** at all agent entities 300a:300N. It is here noted that since only aspects of the global iterations are of relevance for the present disclosure, the global iterations will hereinafter be referred to as iterations.

As disclosed above, having each agent to broadcast its model parameter vector to its neighboring agent entities 300a:300N (as in step S1) during each global iteration is resource-inefficient.

It is one object of the herein disclosed embodiments to improve the resource usage.

In further detail, according to some random gossip algorithms, an agent randomly selects one single neighboring agent and exchanges information with this selected agent. During the exchange, both agent entities 300a:300N update their attributes as the average of their previous attributes. When applying any such gossip algorithms in the context of decentralized machine learning, the attribute of each agent is the parameter vector of the machine learning model.

Instead of random neighbor selection, other selection criteria may be applied to accelerate the convergence performance. However, such pairwise communication and averaging is more relevant to computer networks where one respective connection is always established between each pair consisting of one source node and one destination node. However, due to the broadcast nature of wireless channels, every node can hear the transmissions of some (but maybe not all) other nodes in the network.

This makes the use of existing technologies unsuitable to improve the resource usage in the present scenario.

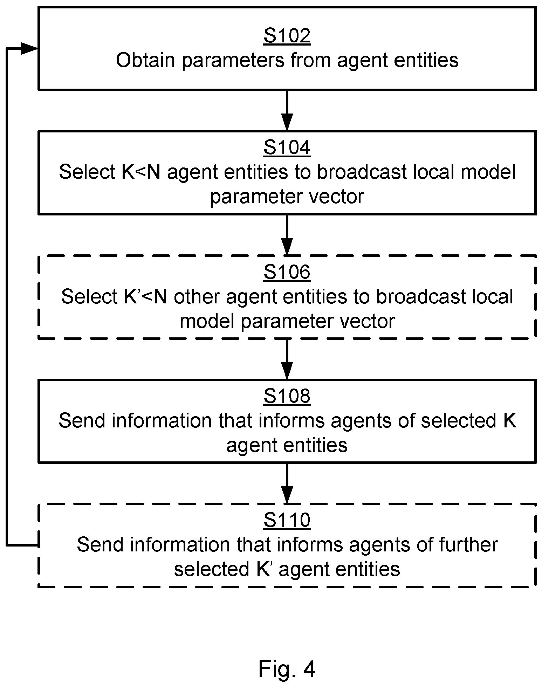

Reference is now made to **Fig. 4** illustrating a method for selecting agent entities 300a:300N to broadcast local model parameter vectors in an iterative learning process as performed by the coordinator entity 200 according to an embodiment. The iterative learning process pertains to a computational task to be performed by *N* agent entities 300a:300N for training a machine learning model. For each iteration round of the iterative learning process, a local model parameter vector with locally computed computational results is computed per each of the *N* agent entities 300a:300N based on its own local training data and at least one local model parameter vector received from at least one other of the agent entities 300a:300N. The locally computed computational results are updates of the machine learning model. For each iteration round of the iterative learning process less than all of the *N* agent entities 300a:300N are to broadcast their local model parameter vector. The method, for each iteration of the iterative learning process, comprises one occurrence of steps S102, S104, S108.

S102: The coordinator entity 200 obtains parameters from the agent entities 300a:300N. The parameters pertain to a utility for each of the agent entities 300a:300N to broadcast its local model parameter vector for the iteration. In other words, the parameters for agent entity n indicate the utility, or usefulness, of a potential broadcast from agent entity n for the present iteration.

S104: The coordinator entity 200 selects *K < N* agent entities 300a:300N to broadcast their local model parameter vector for the iteration by applying a selection criterion to the obtained parameters.

S108: The coordinator entity 200 sends information that informs the *N* agent entities 300a:300N of the selected *K* agent entities 300a:300N.

Thereby, in each iteration, the coordinator entity 200 performs adaptive scheduling by deciding on a subset of agent entities 300a:300N, say *S*, that will broadcast to their neighboring agent entities 300a:300N. That is, with respect to the above disclosed steps S1, S2, and S3, in every iteration all agent entities 300a:300N perform steps S2 and S3, but only the agent entities 300a:300N in the subset S perform step S1. It is here recognized that some data will now be missing in step S2; when, say, agent *n* performs the consensus averaging not all its neighboring agent entities 300a:300N might have broadcast their values. This implies that that not all terms {*zᵢ*} are available to agent *n*. Techniques that as such are known in the art for handling missing data in the consensus averaging, for example by substituting *zₙ* for the missing *zᵢ*-values, and/or by modifying the weights accordingly (e.g. using the balanced compensation method) can be applied to mitigate that some data is missing.

Embodiments relating to further details of selecting agent entities 300a:300N to broadcast local model parameter vectors in an iterative learning process as performed by the coordinator entity 200 will now be disclosed.

There may be different ways for the coordinator entity 200 to in step S104 select the *K* agent entities 300a:300N. Different embodiments relating thereto will now be described in turn.

In some examples, the selection of *S* takes place by at the coordinator entity 200 examining different possible candidate subsets of agent entities 300a:300N, and for each candidate subset evaluating a metric *Uₛ*. Particularly, in some embodiments, the *K* agent entities 300a:300N are selected by the coordinator entity 200 evaluating different possible candidate subsets. Each candidate subset is composed of *K* agent entities 300a:300N. The coordinator entity 200 evaluates the different possible candidate subsets, by, for each candidate subset, evaluating a metric *Uₛ*. The metric *Uₛ* for a given candidate subset is a function of the obtained parameters for the *K* agent entities 300a:300N of said candidate subset.

In some examples, the selection of S is based on a centrality metric *ζₙ* for agent entity **n,** defined over *G*. The centrality metric might, for example, relate to any of betweenness, degree, PageRank/eigenvector centrality or some combination thereof of the agent entities 300a:300N. Particularly, in some embodiments, the parameters for agent entity *n* at least define a value *ζₙ* representing how many other of the *N* agent entities 300a:300N that a broadcast transmission from agent entity *n* reaches. One selection criterion is then to select the candidate subset *S* composed of the *K* agent entities 300a:300N with largest values of *ζₙ*.

In some examples, the selection of *S* is restricted to candidate sets for which the ages, *aₙ*, of all agent entities 300a:300N exceeds a pre-determined threshold. Particularly, in some embodiments, the parameters for agent entity *n* at least define a value *aₙ* representing how many iterations that have been performed since agent entity *n* last broadcast its local model parameter vector. One selection criterion is then to select the candidate subset *S* composed of the *K* agent entities 300a:300N with largest values of *aₙ*.

In some examples, the selection of *S* is restricted to candidate sets for which the wall clock time passed, *bₙ*, of all agent entities 300a:300N exceeds a pre-determined threshold. Particularly, in some embodiments, the parameters for agent entity *n* at least define a value *bₙ* representing duration in time since agent entity *n* last broadcast its local model parameter vector. One selection criterion is then to select the candidate subset *S* composed of the *K* agent entities 300a:300N with largest values of *bₙ*.

In some examples, the selection of *S* is based on the data importance *Dₙ* of each respective agent entity *n*. Particularly, in some embodiments, the parameters for agent entity *n* at least define a value *Dₙ* representing data importance of the local model parameter vector for agent entity *n*. One selection criterion is then to select the candidate subset *S* composed of the *K* agent entities 300a:300N with largest values of *Dₙ*. In some examples, *Dₙ* has the dimension equal to the number of classes and the *j*:th component of *Dₙ* comprises the fraction of data samples that agent *n* has for class *j.* In further detail, if the agent entities 300a:300N only know their label distributions (e.g., described in terms of a histogram that shows the percentage of training data that belongs to each label) locally, one way to quantify the data importance *Dₙ* is to calculate the similarity between a vector that contains the local label distribution of agent *n*, and a vector that contains a reference distribution (for example, uniform over all labels). The similarity between two vectors here could be, for example, the cos-angle (i.e., the normalized inner product) between the vectors. The cos-angle between two vectors *a* and *b* is generally defined as *a^{T}b*/(∥*a*∥ * ∥*b*∥). This is not the only possibility; other similarity metrics are also possible. If the local label distributions of all agent entities 300a:300N are known at the coordinator entity 200, then another possible definition of *Dₙ* is the similarity between the label distribution vector for agent *n*, and a vector that contains the average label distribution for all agent entities 300a:300N. The similarity can be defined in the same way as above.

In some examples, the selection of subsets is restricted to candidate sets for which the availability, *Lₙ*, of all agent entities 300a:300N exceeds a pre-determined threshold. Particularly, in some embodiments, the parameters for agent entity *n* at least define a value *Lₙ* representing availability of agent entity *n* to perform broadcasting of its local model parameter vector. One selection criterion is then to select the candidate subset *S* composed of the *K* agent entities 300a:300N with largest values of *Lₙ*. In some examples, this availability could quantify, for example, the interference situation, or the average load of agent entity *n* over some pre-determined past time window, or a prediction of the load of agent entity *n* in the future, or a battery level of agent entity *n,* or the transmit power that agent entity *n* can use for broadcasting, or some combination of these.

In some examples, the selection of subsets depends on vendor, trust, if an agent entity *n* has been approved, or verified, by the coordinator entity 200 in a preceding agent entity verification method step, etc. Particularly, in some embodiments, the parameters for agent entity *n* at least define any of: vendor of agent entity 300n *n,* trust level of agent entity 300n *n.* One selection criterion is then to select the candidate subset S composed of the *K* agent entities 300a:300N from same vendor, have a trust level higher than a trust level threshold.

Hence, in some examples, the coordinator entity 200 obtains, from each agent entity *n*, the quantities *ζₙ, aₙ*, *bₙ*, *Dₙ, Lₙ*, or some subset thereof. This obtainment can take place in every iteration round, or adaptively. For example, the value of *Dₙ* might not change over time or only change very slowly and hence only needs to be provided once or very infrequently.

As disclosed above, in some examples, the selection of *S* takes place by at the coordinator entity 200 examining different possible candidate subsets of agent entities 300a:300N, and for each candidate subset evaluating a metric *Uₛ*. Further details of this metric *Uₛ* will now be disclosed.

In some examples, the metric *Uₛ* is a function of *ζₙ*, *aₙ*, *bₙ*, *Dₙ, Lₙ*, or some subset of these values. For example, the metric may be obtained as ${U}_{s} = αV \left({\sum }_{n ∈ s} {D}_{n}\right) + {\sum }_{n ∈ s} g \left({ζ}_{n}\right) + {\sum }_{n ∈ s} h \left({a}_{n}\right) + {\sum }_{n ∈ s} p \left({b}_{n}\right) + {\sum }_{n ∈ s} q \left({L}_{n}\right)$ where *V*(*.* ) is a pre-determined function that computes the sample variance of the components of a vector, or a function that computes the absolute value of the gradient update; *g*(.), *h*(*.* ), *p*(*.* ) and *q*(. ) are pre-determined functions (that could be identity mappings or just multiplication with a constant), and *α* is a pre-determined constant. In this example, the first term, containing *V*(.), encourages the selection of agent entities 300a:300N for broadcast that have a small spread among the class labels, i.e., such that collectively, the agent entities 300a:300N selected for broadcast represent data from all classes as much as possible. The second term encourages broadcast by agent entities 300a:300N with high centrality scores in *G*. The third term encourages broadcast by agent entities 300a:300N that have not been selected for broadcast for many iterations. The fourth term encourages broadcast by agent entities 300a:300N that have not broadcasted for a long time (as measured by a wall clock). The last term encourages broadcast by agent entities 300a:300N that have access to many available radio resources. Not all terms need be present in the criterion, and what is given here solely represents an example.

In some examples, the selection of *S* takes place by for each agent determining a utility metric, *Mₙ*, and then selecting the agent entities 300a:300N with the largest metrics. The utility metric *Mₙ* might be a function of one or more, or all, of the previously defined parameters *ζₙ, aₙ*, *bₙ*, *Dₙ, Lₙ*, similarly to how *Uₙ* is defined above. Hence, in some embodiments, the parameters for agent entity *n* at least define a value *Mₙ* representing a utility metric for agent entity *n.* One selection criterion is then to select the candidate subset *S* composed of the *K* agent entities 300a:300N with largest values of *Mₙ.* In some aspects, the utility metric *Mₙ* might be computed based on the magnitude of the local model update (such as defined by the L1 norm) or the magnitude of the model updates compared to the last iteration. Hence, in some embodiments, the utility metric for agent entity *n* at iteration *t* is a function of absolute, or relative, magnitude of the local model parameter vector calculated by agent entity *n* for iteration *t -* 1. In any case, whereas the metric *Uₛ* is computed at the coordinator entity 200, the utility metric *Mₙ* could be computed directly at agent entity *n* and then reported to the coordinator entity 200, which based on the utility metrics *Mₙ* received from all agent entities 300a:300N selects the subset *S*. Hence, in some embodiments, the value *Mₙ* is either obtained by the coordinator entity 200 from agent entity *n*, or computed by the coordinator entity 200 from other parameters obtained from agent entity *n*. For example, the coordinator entity 200 might select the agent entities 300a:300N for which *Mₙ* exceed a pre-determined threshold. Alternatively, the coordinator entity 200 might select the *N'* agent entities 300a:300N with the largest values of *Mₙ* for some pre-determined integer *N'*.

In some aspects, the connectivity between the agent entities 300a:300N change over time. This could, for example, be the case when the agent entities 300a:300N are mobile (i.e., movable) and/or where physical objects are movable in the physical environment in which the agent entities 300a:300N are placed, or that radio conditions for other reasons change. This implies that the connectivity graph could be time-varying, in which case the notation *G*(*t*) is used in lieu of *G*. In some examples the coordinator entity 200 therefore keeps track of the topology defined by *G*(*t*) and adapts the decisions thresholds defined above accordingly.

In some examples, the number *K* of agent entities 300a:300N that broadcast in every iteration is adapted. In particular, in some embodiments, *K* has a value that is dependent on the iteration round of the iterative learning process. For example, in the early iterations a smaller value of *K* might be used which in some instances results in a faster convergence, wheras in later iterations, a larger value of *K* might be be used, which in some instances yields a better accuracy eventually. Hence, in some embodiments, *K* has a value that increases with increasing iteration round of the iterative learning process.

In some examples, the order in which the agent entities 300a:300N in *S* actually broadcast within a given iteration is optimized, for example, based on available radio resources or on the interference situation, or on the available energy per each of the agent entities 300a:300N (for example, if the agent entities 300a:300N are batterypowered). This broadcast order can also be optimized considering how the gradient updates and other computational activities are scheduled in each of the agent entities 300a:300N.

In some examples, two or more subsets are selected where one agent entity in one of the subsets broadcasts simultaneously as another agent entity in another of the subsets. The selection of such subsets should adapt to the path gains between pairs of agent entities 300a:300N. More specifically, in a large wireless network, multiple agent entities 300a:300N can broadcast simultaneously to their neighboring agent entities 300a:300N using the same frequency-time resources without causing much interference to each other, if they are sufficiently separated in space. Assume that the selected *K* agent entities 300a:300N form a first subset of selected agent entities 300a:300N. The method, for each iteration of the iterative learning process, might therefore comprise one occurrence of steps S106, S110.

S106: The coordinator entity 200 selects *K' < N* further agent entities 300a:300N to broadcast their local model parameter vector for the iteration by evaluating the selection criterion. The further *K'* agent entities 300a:300N form a second subset of further selected agent entities 300a:300N disjoint from the first subset of selected agent entities 300a:300N. The further *K'* agent entities 300a:300N are selected according to an interference criterion with respect to the first subset of selected agent entities 300a:300N.

S110: The coordinator entity 200 sends information that informs the *N* agent entities 300a:300N of the further selected *K'* agent entities 300a:300N.

This suggests that within each iteration, for a given frequency-time resource block (RB), more than one agent entity can be selected to perform broadcasting. The selection of the simultaneously broadcasting agent entities 300a:300N can be performed in a way to guarantee that two active agent entities 300a:300N are always separated by some minimum physical distance. Then each set of simultaneously broadcasting agent entities 300a:300N can be assigned to one RB. This procedure can be expressed as follows using pseudo-code.

```
Initialization: L (number of RBs), K (number of agent entities 300a:300N), D (minimum distance),=
{1,2, ..., K} set of agent entities 300a:300N, =
for l = 1, ..., L
```

```
 run Repulsion(, D), return (l)
  = \ (l)
 if = Ø, break
```

```
 end
 =Repulsion(, D)
 Initialization: mark(a)=1 for all a ∈
 for a ∈ and mark(a)=1
 for b ∈ \ a and mark(b)=1
 if distance(a, b)<D
 mark(b)=0
 end
 end
 return = (mark = 1)
```

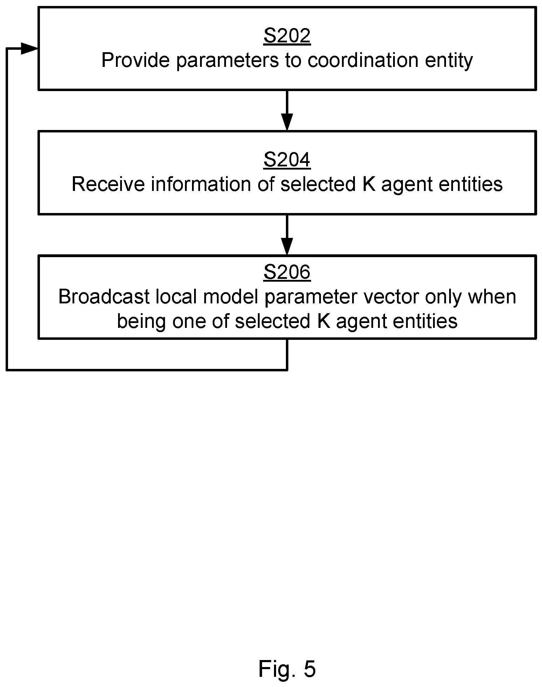

Reference is now made to **Fig. 5** illustrating a method for performing an iterative learning process as performed by the agent entity 300n according to an embodiment. The iterative learning process pertains to a computational task to be performed by the agent entity 300n for training a machine learning model. For each iteration round of the iterative learning process, a local model parameter vector with locally computed computational results is computed by the agent entity 300n based on its own local training data and local model parameter vectors received from other agent entities 300a:300N. The locally computed computational results are updates of the machine learning model. For each iteration round of the iterative learning process the agent entity 300n is only to broadcast its local model parameter vector when informed to do so. The method, for each iteration of the iterative learning process, comprises one occurrence of steps S202, S204, S206.

S202: The agent entity 300n provides parameters to a coordinator entity 200, wherein the parameters pertain to a utility for the agent entity 300n to broadcast its local model parameter vector for the iteration.

S204: The agent entity 300n receives information from the coordinator entity 200 that informs the agent entity 300n of which *K* agent entities 300a:300N that have been selected to broadcast their local model parameter vector for the iteration.

S206: The agent entity 300n broadcasts the local model parameter vector only when the agent entity 300n is one of the selected *K* agent entities 300a:300N.

Embodiments relating to further details of performing an iterative learning process as performed by the agent entity 300n will now be disclosed.

There may be different types of parameters provided to the coordinator entity 200 in step S202. Different embodiments relating thereto will now be described in turn. In general terms, the different types of parameters correspond to those defined above with respect to the methods performed by the coordinator entity 200.

In some embodiments, the parameters for the agent entity 300n at least define a value *ζₙ* representing how many other of the *N* agent entities 300a:300N that a broadcast transmission from the agent entity 300n reaches.

In some embodiments, the parameters for the agent entity 300n at least define a value *aₙ* representing how many iterations that have been performed since the agent entity 300n last broadcast its local model parameter vector.

In some embodiments, the parameters for the agent entity 300n at least define a value *bₙ* representing duration in time since the agent entity 300n last broadcast its local model parameter vector.

In some embodiments, the parameters for the agent entity 300n at least define a value *Dₙ* representing data importance of the local model parameter vector for the agent entity 300n.

In some embodiments, the parameters for the agent entity 300n at least define a value *Lₙ* representing availability of the agent entity 300n to perform broadcasting of its local model parameter vector.

In some embodiments, the parameters for the agent entity 300n at least define a value *Mₙ* representing a utility metric for the agent entity 300n.

In some embodiments, the parameters for the agent entity 300n at least define any of: vendor of the agent entity 300n, trust level of the agent entity 300n.

In some examples, the communication networks 100b and 100c of Fig. 2 and Fig. 3 represent distributed computing architectures. Hence, in some examples, the agent entities 300a:300N are provided in a distributed computing architecture 100b, 100c. Further, as disclosed above with reference to Fig. 2 and Fig. 3, the coordinator entity 200 might be provided in a network node 110, and each of the agent entities 300a:300N might be provided in a respective user equipment 120a:120N. Alternatively, the coordinator entity 200 might be provided in one of the user equipment 120a:120N. In furter examples, the coordinator entity 200 might be provided in any of: a (radio) access network node, a core network node, a node that is external to a radio access network. In furter examples, functionality of the coordinator entity 200 might be implemented as a function in any of: a cloud computing environment, an edge cloud computing environment, a centralized (radio) access network, an operation support system, an orchestration and management system, a service management and orchestration system, an open (radio) access network.

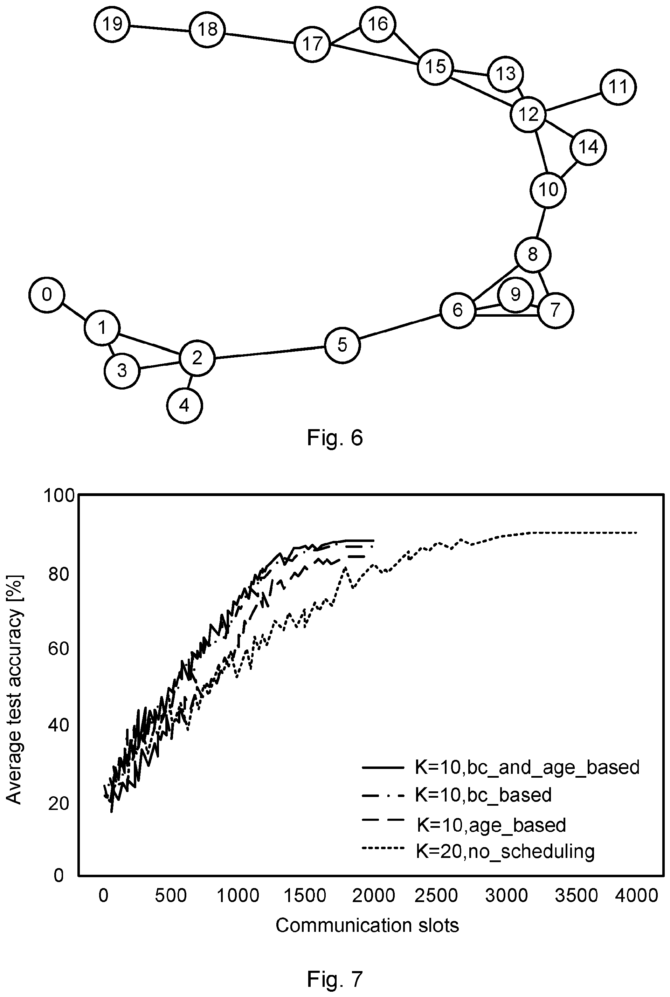

Numerical examples will be disclosed next with reference to Fig. 6 and Fig. 7. In **Fig. 6** is illustrated the connectivity graph for the agent entities 300a:300N used in the simulations. In Fig. 6 there are 20 agent entities, each represented by an encircled number from 0 to 19. Lines between the circles represent the connections in the connectivity graph. In **Fig. 7** is shown simulation results in terms of text accuracy (i.e., the accuracy for a handwritten digit to be correctly interpreted) as a function of number of communication slots used, where in each communication slot one or more of the agent entities 300a:300N brodcasts their local updates according to the four methods disclosed below. The results are presented for the Modified National Institute of Standards and Technology (MNIST) dataset that contains 60 000 images of handwritten digits for training and 10 000 for testing.

The training data was organized based on the labels (from 0 to 9 in this case), and then split into *T* · *N* shards, where each shard contains $int \left(\frac{60 000}{T ⋅ N}\right)$ images, where int(*x*) is the integer value of *x.* Each of the agent entities 300a:300N is provided *T* random shards and that is its dataset for training. For the following example, *T* = 2. This corresponds to a situation with a highly non- independent and identically distributed data.

For the learning model, each agent has its own multilayer perceptron (MLP) model, with the Rectified Linear Unit (ReLU) as activation function and dropout (*p* = 0.5) and weight decay (0.01) as regularization technique. The loss function used by all agent entities 300a:300N is cross-entropy. Each of the agent entities 300a:300N updates its parameter vector by performing 5 instances of SGD from batches with size int(12 000/*N*), a momentum of 0.9, and a decaying learning rate starting at 0.1 and being updated according to: $lr \left(t+1\right) = lr \left(t\right) ⋅ \left(1/\left(1+lr_decay⋅t\right)\right)$ where *t* is the iteration number and Ir_decay = 0.0003.

For the broadcast scheduling, the following different algorithms were used by the coordinator entity 200 to select *K* agent entities 300a:300N that per each iteration will broadcast its parameter vector for consensus update.
bc_based method: Agent entities 300a:300N are selected for broadcast randomly, by assigning a probability to every agent based on its betweenness centrality. One rationale for including this method is to compare against a simple baseline scheduler that does not use age or wall clock time as criterion.
age_based method: the following selection criterion is used: sort(age(*i*)) → select_highest_*K* where age(*i*) is the number of iterations since agent *i* was selected for broadcast.
bc_and_age_based method: the following selection criterion is used: sort(Bc(i) + *α ·* age(*i*)) → *se*lect_highest_*K*, where *α* = 0.01, and where Bc(*i*) is the betweenness centrality score of the agent *i,* and age(*i*) is the number of iterations since agent *i* was selected for broadcast.
no_scheduling method: all agent entities 300a:300N broadcast their parameter vector in every iteration.

Once the agent entities 300a:300N that will broadcast their parameter vectors have been selected, a selection vector, *s*(*t*) = [*s*₁(*t*), *s*₂(*t*), ... , *s_{N}*(*t*)], is created, where *sᵢ*(*t*) = 1 if agent *i* was selected for broadcast in iteration *t.* For the consensus update, a new weight matrix, *W'*(*t*), is created with elements: ${w}_{ij}^{′} \left(t\right) = {I}_{\left\{{w}_{ij}>0\right\}} ⋅ {s}_{j} \left(t\right) ⋅ \left({w}_{ij}+\frac{{f}_{1} \left({s}_{k}, {w}_{ik}\right)}{{f}_{2} \left({s}_{m}, {w}_{im}\right)}\right)$ where ${f}_{1} \left({s}_{k}, {w}_{ik}\right) = {\sum }_{k = 1}^{N} \left(1-{s}_{k}\right) ⋅ {w}_{ik}$ where ${f}_{2} \left({s}_{m}, {w}_{im}\right) = {\sum }_{m = 1}^{N} {I}_{\left\{{w}_{im}>0\right\}} ⋅ {s}_{m}$ and where ${I}_{\left\{{w}_{ij}>0\right\}}$ is the indicator function that is equal to one if the expression inside the curly brackets is accomplished, and zero otherwise. Then, the consensus update step is as follows: $x \left(t+1\right) = W ′ \left(t\right) x \left(t\right)$

Non-limiting examples of scenarios where the herein disclosed embodiments can be applied will be disclosed next.

According to a first example, the iterative learning procedure concerns surveillance, using a network of cameras, of a particular area public or private). Each camera is associated with its own agent entity 300a:300N. The network is configured to learn a global machine learning model that can be used to detect whether suspicious activity is ongoing in any of the video imagery as captured by the cameras. The suspicious activity could pertain to identifying unauthorized persons present in a private area, identifying vehicles in the area, or monitoring the area for any criminal activity. The cameras however, for privacy reasons, are not allowed to share their raw image data. An iterative learning procedure can then be used to train the global machine learning model, where the cameras share only model (gradient) updates in terms of parameter vectors, rather than their observations. In this case the parameter vectors might represent predictions of the content in the images (for examples, parameters of a face recognition algorithm).

According to a second example, the iterative learning procedure concerns a natural language processing application. The agent entities 300a:300N could learn a language model that represents a machine learning model, for example for text prediction when typing on a user equipment 120a:120K, such as a mobile device, where each of the agent entities 300a:300N thus could be associated with their own user equipment 120a:120K. Using an iterative learning procedure, only updates to the model need to be shared, but raw text data will not be shared.

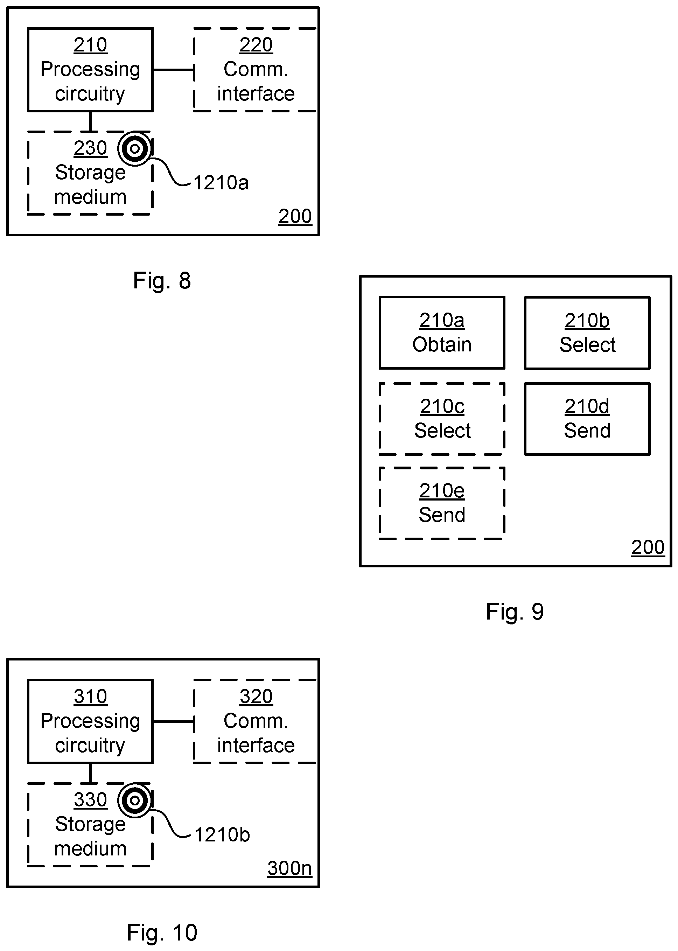

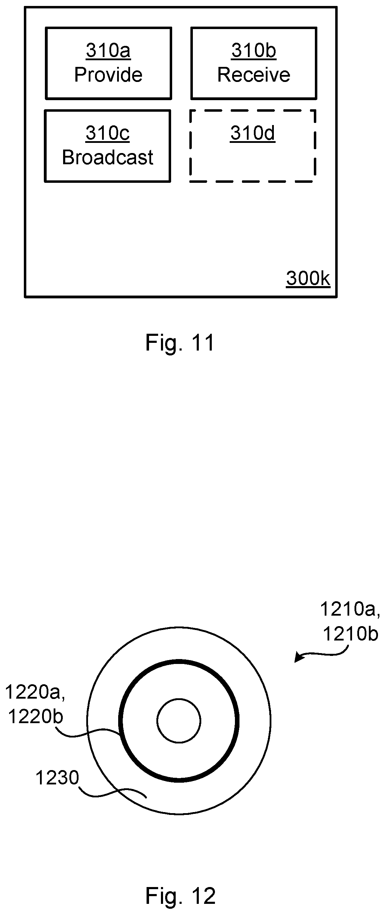

**Fig. 8** schematically illustrates, in terms of a number of functional units, the components of a coordinator entity 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1210a (as in Fig. 12), e.g. in the form of a storage medium 230. The processing circuitry 210 may further be provided as at least one application specific integrated circuit (ASIC), or field programmable gate array (FPGA).

Particularly, the processing circuitry 210 is configured to cause the coordinator entity 200 to perform a set of operations, or steps, as disclosed above. For example, the storage medium 230 may store the set of operations, and the processing circuitry 210 may be configured to retrieve the set of operations from the storage medium 230 to cause the coordinator entity 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The coordinator entity 200 may further comprise a communications interface 220 for communications with other entities, functions, nodes, and devices, such as the agent entities 300a:300N, either directly or indirectly. As such the communications interface 220 may comprise one or more transmitters and receivers, comprising analogue and digital components.

The processing circuitry 210 controls the general operation of the coordinator entity 200 e.g. by sending data and control signals to the communications interface 220 and the storage medium 230, by receiving data and reports from the communications interface 220, and by retrieving data and instructions from the storage medium 230. Other components, as well as the related functionality, of the coordinator entity 200 are omitted in order not to obscure the concepts presented herein.

**Fig. 9** schematically illustrates, in terms of a number of functional modules, the components of a coordinator entity 200 according to an embodiment. The coordinator entity 200 of Fig. 9 comprises a number of functional modules; an obtain module 210a configured to perform step S102, a select module 210b configured to perform step S104, and a send module 210d configured to perform step S108. The coordinator entity 200 of Fig. 9 may further comprise a number of optional functional modules, such as any of a select module 210c configured to perform step S106 and a send module 210e configured to perform step S110. In general terms, each functional module 210a:210e may be implemented in hardware or in software. Preferably, one or more or all functional modules 210a:210e may be implemented by the processing circuitry 210, possibly in cooperation with the communications interface 220 and/or the storage medium 230. The processing circuitry 210 may thus be arranged to from the storage medium 230 fetch instructions as provided by a functional module 210a:210e and to execute these instructions, thereby performing any steps of the coordinator entity 200 as disclosed herein.

The coordinator entity 200 may be provided as a standalone device or as a part of at least one further device. For example, the coordinator entity 200 may be provided in a node of a radio access network or in a node of a core network. Alternatively, functionality of the coordinator entity 200 may be distributed between at least two devices, or nodes. These at least two nodes, or devices, may either be part of the same network part (such as the radio access network or the core network) or may be spread between at least two such network parts. In general terms, instructions that are required to be performed in real time may be performed in a device, or node, operatively closer to the cell than instructions that are not required to be performed in real time. A first portion of the instructions performed by the coordinator entity 200 may be executed in a first device, and a second portion of the instructions performed by the coordinator entity 200 may be executed in a second device; the herein disclosed embodiments are not limited to any particular number of devices on which the instructions performed by the coordinator entity 200 may be executed. Hence, the methods according to the herein disclosed embodiments are suitable to be performed by a coordinator entity 200 residing in a cloud computational environment. Therefore, although a single processing circuitry 210 is illustrated in Fig. 8 the processing circuitry 210 may be distributed among a plurality of devices, or nodes. The same applies to the functional modules 210a:210e of Fig. 9 and the computer program 1220a of Fig. 12.

**Fig. 10** schematically illustrates, in terms of a number of functional units, the components of an agent entity 300n according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1210b (as in Fig. 12), e.g. in the form of a storage medium 330. The processing circuitry 310 may further be provided as at least one application specific integrated circuit (ASIC), or field programmable gate array (FPGA).

Particularly, the processing circuitry 310 is configured to cause the agent entity 300n to perform a set of operations, or steps, as disclosed above. For example, the storage medium 330 may store the set of operations, and the processing circuitry 310 may be configured to retrieve the set of operations from the storage medium 330 to cause the agent entity 300n to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The agent entity 300n may further comprise a communications interface 320 for communications with other entities, functions, nodes, and devices, such as other agent entities 300a:300N and the coordinator entity 200, either directly or indirectly. As such the communications interface 320 may comprise one or more transmitters and receivers, comprising analogue and digital components.

The processing circuitry 310 controls the general operation of the agent entity 300n e.g. by sending data and control signals to the communications interface 320 and the storage medium 330, by receiving data and reports from the communications interface 320, and by retrieving data and instructions from the storage medium 330. Other components, as well as the related functionality, of the agent entity 300n are omitted in order not to obscure the concepts presented herein.

**Fig. 11** schematically illustrates, in terms of a number of functional modules, the components of an agent entity 300n according to an embodiment. The agent entity 300n of Fig. 11 comprises a number of functional modules; a provide module 310a configured to perform step S202, a receive module 310b configured to perform step S204, and a broadcast module 310c configured to perform step S206. The agent entity 300n of Fig. 11 may further comprise a number of optional functional modules, as represented by functional module 310d. In general terms, each functional module 310a:310d may be implemented in hardware or in software. Preferably, one or more or all functional modules 310a:310d may be implemented by the processing circuitry 310, possibly in cooperation with the communications interface 320 and/or the storage medium 330. The processing circuitry 310 may thus be arranged to from the storage medium 330 fetch instructions as provided by a functional module 310a:310d and to execute these instructions, thereby performing any steps of the agent entity 300n as disclosed herein.

**Fig. 12** shows one example of a computer program product 1210a, 1210b comprising computer readable means 1230. On this computer readable means 1230, a computer program 1220a can be stored, which computer program 1220a can cause the processing circuitry 210 and thereto operatively coupled entities and devices, such as the communications interface 220 and the storage medium 230, to execute methods according to embodiments described herein. The computer program 1220a and/or computer program product 1210a may thus provide means for performing any steps of the coordinator entity 200 as herein disclosed. On this computer readable means 1230, a computer program 1220b can be stored, which computer program 1220b can cause the processing circuitry 310 and thereto operatively coupled entities and devices, such as the communications interface 320 and the storage medium 330, to execute methods according to embodiments described herein. The computer program 1220b and/or computer program product 1210b may thus provide means for performing any steps of the agent entity 300n as herein disclosed.

In the example of Fig. 12, the computer program product 1210a, 1210b is illustrated as an optical disc, such as a CD (compact disc) or a DVD (digital versatile disc) or a Blu-Ray disc. The computer program product 1210a, 1210b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1220a, 1220b is here schematically shown as a track on the depicted optical disk, the computer program 1220a, 1220b can be stored in any way which is suitable for the computer program product 1210a, 1210b.

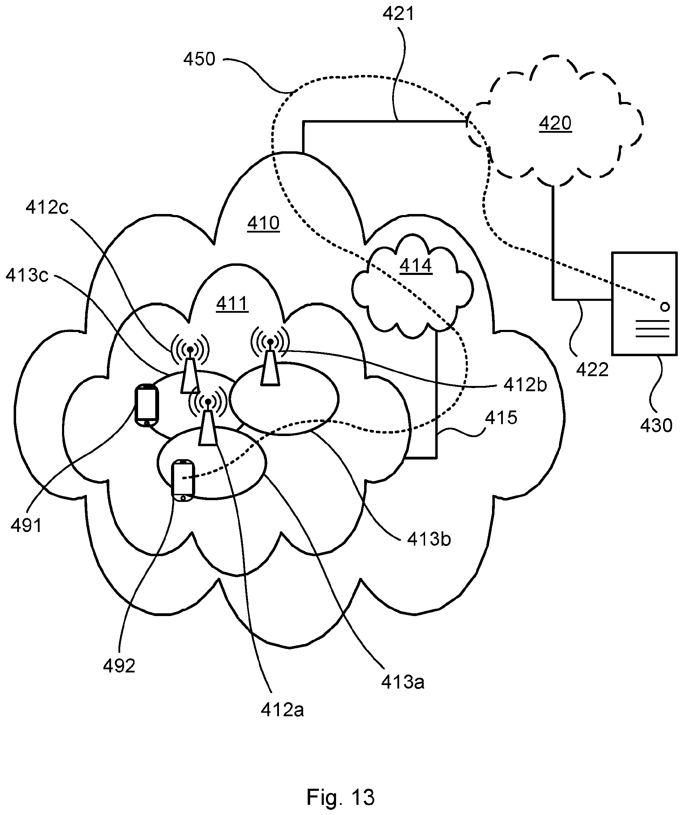

**Fig. 13** is a schematic diagram illustrating a telecommunication network connected via an intermediate network 420 to a host computer 430 in accordance with some embodiments. In accordance with an embodiment, a communication system includes telecommunication network 410, such as a 3GPP-type cellular network, which comprises access network 411, and core network 414. Access network 411 comprises a plurality of radio access network nodes 412a, 412b, 412c, such as NBs, eNBs, gNBs (each corresponding to the network node 110) or other types of wireless access points, each defining a corresponding coverage area, or cell, 413a, 413b, 413c. Each radio access network nodes 412a, 412b, 412c is connectable to core network 414 over a wired or wireless connection 415. A first UE 491 located in coverage area 413c is configured to wirelessly connect to, or be paged by, the corresponding network node 412c. A second UE 492 in coverage area 413a is wirelessly connectable to the corresponding network node 412a. While a plurality of UE 491, 492 are illustrated in this example, the disclosed embodiments are equally applicable to a situation where a sole UE is in the coverage area or where a sole terminal device is connecting to the corresponding network node 412. The UEs 491, 492 correspond to the user equipment 120a:120N.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of Fig. 13 as a whole enables connectivity between the connected UEs 491, 492 and host computer 430. The connectivity may be described as an over-the-top (OTT) connection 450. Host computer 430 and the connected UEs 491, 492 are configured to communicate data and/or signalling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, network node 412 may not or need not be informed about the past routing of an incoming downlink communication with data originating from host computer 430 to be forwarded (e.g., handed over) to a connected UE 491. Similarly, network node 412 need not be aware of the future routing of an outgoing uplink communication originating from the UE 491 towards the host computer 430.

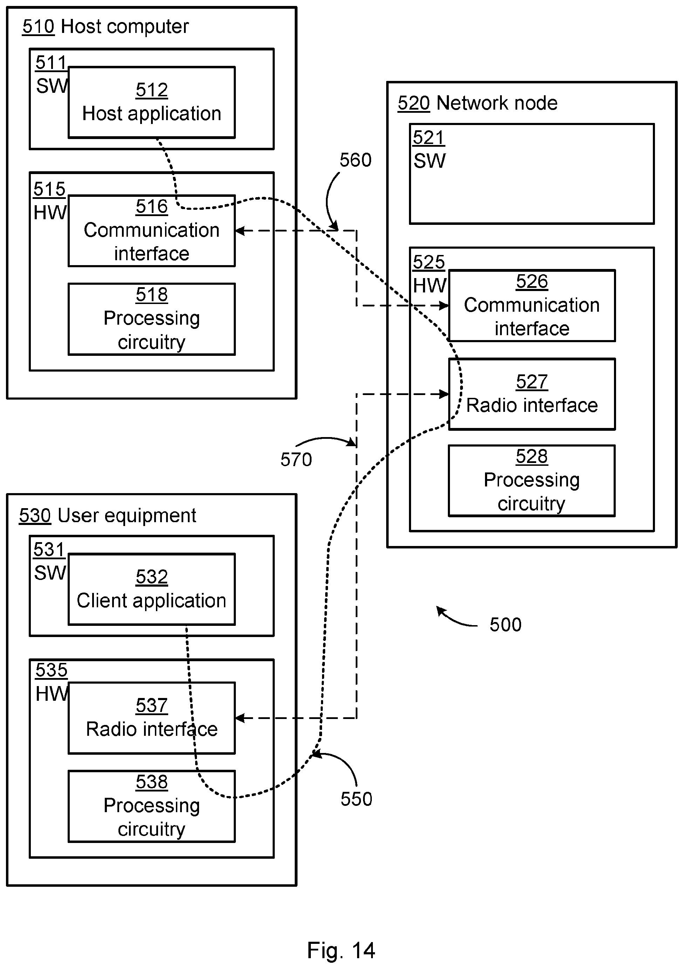

**Fig. 14** is a schematic diagram illustrating host computer communicating via a radio access network node with a UE over a partially wireless connection in accordance with some embodiments. Example implementations, in accordance with an embodiment, of the UE, radio access network node and host computer discussed in the preceding paragraphs will now be described with reference to Fig. 14. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. The UE 530 corresponds to the user equipment 120a:120N. In providing the service to the remote user, host application 512 may provide user data which is transmitted using OTT connection 550.

Communication system 500 further includes radio access network node 520 provided in a telecommunication system and comprising hardware 525 enabling it to communicate with host computer 510 and with UE 530. The radio access network node 520 corresponds to the network node 110. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Fig. 14) served by radio access network node 520. Communication interface 526 may be configured to facilitate connection 560 to host computer 510. Connection 560 may be direct or it may pass through a core network (not shown in Fig. 14) of the telecommunication system and/or through one or more intermediate networks outside the telecommunication system. In the embodiment shown, hardware 525 of radio access network node 520 further includes processing circuitry 528, which may comprise one or more programmable processors, application-specific integrated circuits, field programmable gate arrays or combinations of these (not shown) adapted to execute instructions. Radio access network node 520 further has software 521 stored internally or accessible via an external connection.

Communication system 500 further includes UE 530 already referred to. Its hardware 535 may include radio interface 537 configured to set up and maintain wireless connection 570 with a radio access network node serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, radio access network node 520 and UE 530 illustrated in Fig. 14 may be similar or identical to host computer 430, one of network nodes 412a, 412b, 412c and one of UEs 491, 492 of Fig. 13, respectively. This is to say, the inner workings of these entities may be as shown in Fig. 14 and independently, the surrounding network topology may be that of Fig. 13.

In Fig. 14, OTT connection 550 has been drawn abstractly to illustrate the communication between host computer 510 and UE 530 via network node 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and radio access network node 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may reduce interference, due to improved classification ability of airborne UEs which can generate significant interference.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect network node 520, and it may be unknown or imperceptible to radio access network node 520. Such procedures and functionalities may be known and practiced in the art. In certain embodiments, measurements may involve proprietary UE signalling facilitating host computer's 510 measurements of throughput, propagation times, latency and the like. The measurements may be implemented in that software 511 and 531 causes messages to be transmitted, in particular empty or 'dummy' messages, using OTT connection 550 while it monitors propagation times, errors etc.

## Claims

1. A method for selecting agent entities (300a:300N) to broadcast local mode parameter vectors in an iterative learning process, wherein the method is performed by a coordinator entity (200) which comprises processing circuitry,
wherein the iterative learning process pertains to a computational task to be performed by *N* agent entities (300a:300N), with each agent entity comprising processing circuitry, for training a machine learning model,
wherein, for each iteration round of the iterative learning process, a local model parameter vector with locally computed computational results is computed per each of the N agent entities (300a:300N) based on its own local training data and at least one local model parameter vector received from at least one other of the agent entities (300a:300N),
wherein the locally computed computational results are updates of the machine learning model,
wherein for each iteration round of the iterative learning process less than all of the N agent entities (300a:300N) are to broadcast their local model parameter vector, and
wherein the method, for each iteration of the iterative learning process, comprises:
obtaining (S102) parameters from the agent entities (300a:300N), wherein the parameters pertain to a utility for each of the agent entities (300a:300N) to broadcast its local model parameter vector for the iteration;
selecting (S104) *K* < *N* agent entities (300a:300N) to broadcast their local model parameter vector for the iteration by applying a selection criterion to the obtained parameters;
wherein *K* has a value that increases with increasing iteration round of the iterative learning process, or wherein the parameters for agent entity (300n) n at least define a value *ζₙ* representing how many other of the *N* agent entities (300a:300N) that a broadcast transmission from agent entity (300n) n reaches, and wherein one selection criterion is to select the candidate subset *S* composed of the *K* agent entities (300a:300N) with largest values of *ζₙ*; and
sending (S108) information that informs the *N* agent entities (300a:300N) of the selected *K* agent entities (300a:300N).

2. The method according to claim 1, wherein the *K* agent entities (300a:300N) are selected by the coordinator entity (200) evaluating different possible candidate subsets, each composed of *K* agent entities (300a:300N), by, for each candidate subset, evaluating a metric *Uₛ*, wherein the metric *Uₛ* for a given candidate subset is a function of the obtained parameters for the *K* agent entities (300a:300N) of said candidate subset.

3. The method according to claim 1 or 2, wherein the parameters for agent entity (300n) *n* define one or more of:
a value *aₙ* representing how many iterations that have been performed since agent entity (300n) n last broadcast its local model parameter vector, and wherein one selection criterion is to select the candidate subset S composed of the *K* agent entities (300a:300N) with largest values of *aₙ*;
a value *bₙ* representing duration in time since agent entity (300n) n last broadcast its local model parameter vector, and wherein one selection criterion is to select the candidate subset *S* composed of the *K* agent entities (300a:300N) with largest values of *b*ₙ*;*
a value *Dₙ* representing data importance of the local model parameter vector for agent entity (300n) *n*, and
wherein one selection criterion is to select the candidate subset *S* composed of the *K* agent entities (300a:300N) with largest values of *Dₙ*;
a value *Lₙ* representing availability of agent entity (300n) *n* to perform broadcasting of its local model parameter vector, and wherein one selection criterion is to select the candidate subset *S* composed of the *K* agent entities (300a:300N) with largest values of *Lₙ*; and
a value *Mₙ* representing a utility metric for agent entity (300n) *n*, and wherein one selection criterion is to select the candidate subset *S* composed of the *K* agent entities (300a:300N) with largest values of *Mₙ.*

4. The method according to any of claims 1 to 3, wherein the parameters for agent entity (300n) *n* at least define any of: vendor of said agent entity (300n) *n*, trust level of said agent entity (300n) *n*, and wherein one selection criterion is to select the candidate subset *S* composed of the *K* agent entities (300a:300N) from same vendor, have a trust level higher than a trust level threshold.

5. The method according to any preceding claim, wherein *K* has a value that is dependent on the iteration round of the iterative learning process.

6. The method according to any preceding claim, wherein the selected *K* agent entities (300a:300N) form a first subset of selected agent entities (300a:300N), and wherein the method further comprises:
selecting (S106) *K'* < *N* further agent entities (300a:300N) to broadcast their local model parameter vector for the iteration by evaluating the selection criterion, wherein the further *K'* agent entities (300a:300N) form a second subset of further selected agent entities (300a:300N) disjoint from the first subset of selected agent entities (300a:300N), and wherein the further *K'* agent entities (300a:300N) are selected according to an interference criterion with respect to the first subset of selected agent entities (300a:300N); and
sending (S110) information that informs the *N* agent entities (300a:300N) of the further selected *K'* agent entities (300a:300N).

7. A method for performing an iterative learning process
wherein the method is performed by an agent entity (300n) which comprises processing circuitry,
wherein the iterative learning process pertains to a computational task to be performed by the agent entity (300n) for training a machine learning model,
wherein, for each iteration round of the iterative learning process, a local model parameter vector with locally computed computational results is computed by the agent entity (300n) phased on its own local training data and local model parameter vectors received from other agent entities (300a:300N), with each of the other agent entities comprising processing circuitry,
wherein the locally computed computational results are updates of the machine learning model,
wherein for each iteration round of the iterative learning process the agent entity (300n) is only to broadcast its local model parameter vector when informed to do so, and
wherein the method, for each iteration of the iterative learning process, comprises:
providing (S202) parameters to a coordinator entity (200) which comprises processing circuitry,
wherein the parameters pertain to a utility for the agent entity (300n) to broadcast its local model parameter vector for the iteration;
wherein the parameters for the agent entity (300n) at least define a value *ζₙ* representing how many other of the *N* agent entities (300a:300N) that a broadcast transmission from the agent entity (300n) reaches;
receiving (S204) information from the coordinator entity (200) that informs the agent entity (300n) of which *K* agent entities (300a:300N) that have been selected to broadcast their local model parameter vector for the iteration; and
broadcasting (S206) the local model parameter vector only when the agent entity (300n) is one of the selected *K* agent entities (300a:300N).

8. The method according to claim 7, wherein the parameters for the agent entity (300n) define one or more of:
a value *aₙ* representing how many iterations that have been performed since the agent entity (300n) last broadcast its local model parameter vector;
a value *bₙ* representing duration in time since the agent entity (300n) last broadcast its local model parameter vector;
a value *Dₙ* representing data importance of the local model parameter vector for the agent entity (300n);
a value *Lₙ* representing availability of the agent entity (300n) to perform broadcasting of its local model parameter vector; and
a value *Mₙ* representing a utility metric for the agent entity (300n).

9. The method according to any of claims 7 to 8, wherein the parameters for the agent entity (300n) at least define any of: vendor of the agent entity (300n), trust level of the agent entity (300n).

10. The method according to any preceding claim, wherein the coordinator entity (200) is provided in a network node (110), and each of the agent entities (300a:300N) is provided in a respective user equipment (120a: 120N).

11. The method according to any preceding claim, wherein the agent entities (300a:300N) are provided in a distributed computing architecture (100b, 100c).

12. A coordinator entity (200) for selecting agent entities (300a:300N) to broadcast local model parameter vectors in an iterative learning process,
wherein the iterative learning process pertains to a computational task to be performed by *N* agent entities (300a:300N), with each agent entity comprising processing circuitry, for training a machine learning model,
wherein, for each iteration round of the iterative learning process, a local model parameter vector with locally computed computational results is computed per each of the N agent entities (300a:300N) based on its own local training data and at least one local model parameter vector received from at least one other of the agent entities (300a:300N),
wherein the locally computed computational results are updates of the machine learning model,
wherein for each iteration round of the iterative learning process less than all of the N agent entities (300a:300N) are to broadcast their local model parameter vector,
the coordinator entity (200) comprising processing circuitry (210), the processing circuitry being configured to cause the coordinator entity (200) to, for each iteration of the iterative learning process:
obtain parameters from the agent entities (300a:300N), wherein the parameters pertain to a utility for each of the agent entities (300a:300N) to broadcast its local model parameter vector for the iteration;
select *K* < *N* agent entities (300a:300N) to broadcast their local model parameter vector for the iteration by applying a selection criterion to the obtained parameters;
wherein *K* has a value that increases with increasing iteration round of the iterative learning process, or wherein the parameters for agent entity (300n) n at least define a value *ζₙ* representing how many other of the *N* agent entities (300a:300N) that a broadcast transmission from agent entity (300n) *n* reaches, and wherein one selection criterion is to select the candidate subset *S* composed of the *K* agent entities (300a:300N) with largest values of *ζₙ*; and
send information that informs the *N* agent entities (300a:300N) of the selected *K* agent entities (300a:300N).

13. The coordinator entity (200) according to claim 12, further being configured to perform the method according to any of claims 2 to 6.

14. An agent entity (300n) for performing an iterative learning process,
wherein the iterative learning process pertains to a computational task to be performed by the agent entity (300n) for training a machine learning model,
wherein, for each iteration round of the iterative learning process, a local model parameter vector with locally computed computational results is computed by the agent entity (300n) based on its own local training data and local model parameter vectors received from other agent entities (300a:300N), with each of the other agent entities comprising processing circuitry,
wherein the locally computed computational results are updates of the machine learning model,
wherein for each iteration round of the iterative learning process the agent entity (300n) is only to broadcast its local model parameter vector when informed to do so, and
the agent entity (300n) comprising processing circuitry (310), the processing circuitry being configured to cause the agent entity (300n) to, for each iteration of the iterative learning process:
provide parameters to a coordinator entity (200) which comprises processing circuitry, wherein the parameters pertain to a utility for the agent entity (300n) to broadcast its local model parameter vector for the iteration;
wherein the parameters for the agent entity (300n) at least define a value *ζₙ* representing how many other of the *N* agent entities (300a:300N) that a broadcast transmission from the agent entity (300n) reaches;
receive information from the coordinator entity (200) that informs the agent entity (300n) of which *K* agent entities (300a:300N) that have been selected to broadcast their local model parameter vector for the iteration; and
broabdcast the local model parameter vector only when the agent entity (300n) is one of the selected *K* agent entities (300a:300N).

15. The agent entity (300n) according to claim 14, further being configured to perform the method according to any of claims 8 to 11.

## Patentansprüche

1. Verfahren zur Auswahl von Agenten-Entitäten (300a:300N) zum Rundsenden lokaler Modellparametervektoren in einem iterativen Lernprozess, wobei das Verfahren von einer Koordinator-Entität (200) durchgeführt wird, die Verarbeitungsschaltungsanordnung umfasst,
wobei der iterative Lernprozess eine Rechenaufgabe, die von *N* Agenten-Entitäten (300a:300N) durchgeführt werden soll, wobei jede Agenten-Entität Verarbeitungsschaltungsanordnung umfasst, zum Trainieren eines Modells für maschinelles Lernen betrifft,
wobei für jede Iterationsrunde des iterativen Lernprozesses ein lokaler Modellparametervektor mit lokal berechneten Rechenergebnissen für jede der *N* Agenten-Entitäten (300a:300N) basierend auf ihren eigenen lokalen Trainingsdaten und mindestens einem lokalen Modellparametervektor berechnet wird, der von mindestens einer anderen der Agenten-Entitäten (300a:300N) empfangen wird,
wobei die lokal berechneten Rechenergebnisse Aktualisierungen des Modells für maschinelles Lernen sind,
wobei für jede Iterationsrunde des iterativen Lernprozesses weniger als alle der *N* Agenten-Entitäten (300a:300N) ihren lokalen Modellparametervektor rundsenden sollen,
wobei das Verfahren für jede Iteration des iterativen Lernprozesses Folgendes umfasst:
Erhalten (S102) von Parametern von den Agenten-Entitäten (300a:300N), wobei die Parameter einen Nutzwert für jede der Agenten-Entitäten (300a:300N) zum Rundsenden ihres lokalen Modellparametervektors für die Iteration betreffen;
Auswählen (S104) von *K* < *N* Agenten-Entitäten (300a:300N) zum Rundsenden ihres lokalen Modellparametervektors für die Iteration durch Anwenden eines Auswahlkriteriums auf die erhaltenen Parameter;
wobei *K* einen Wert hat, der mit zunehmender Iterationsrunde des iterativen Lernprozesses zunimmt, oder wobei die Parameter für eine Agenten-Entität (300n) *n* mindestens einen Wert *ζₙ* definieren, der darstellt, wie viele andere der *N* Agenten-Entitäten (300a:300N) eine Rundfunkübertragung von einer Agenten-Entität (300n) *n* erreicht, und wobei ein Auswahlkriterium darin besteht, die Kandidatenteilmenge *S* auszuwählen, die aus den *K* Agenten-Entitäten (300a:300N) mit den größten Werten von *ζₙ* besteht; und
Senden (S108) von Informationen, die die *N* Agenten-Entitäten (300a:300N) über die ausgewählten *K* Agenten-Entitäten (300a:300N) informieren.

2. Verfahren nach Anspruch 1, wobei die *K* Agenten-Entitäten (300a:300N) von der Koordinator-Entität (200) ausgewählt werden, die verschiedene mögliche Kandidatenteilmengen auswertet, die jeweils aus *K* Agenten-Entitäten (300a:300N) bestehen, indem für jede Kandidatenteilmenge eine Metrik *Uₛ* ausgewertet wird, wobei die Metrik *Uₛ* für eine gegebene Kandidatenteilmenge ein Funktion der erhaltenen Parameter für die *K* Agenten-Entitäten (300a:300N) der Kandidatenteilmenge ist.

3. Verfahren nach Anspruch 1 oder 2, wobei die Parameter für die Agenten-Entität (300n) *n* eines oder mehrere von Folgenden definieren:
einen Wert *aₙ*, der darstellt, wie viele Iterationen durchgeführt wurden, seit die Agenten-Entität (300n) *n* zuletzt ihren lokalen Modellparametervektor rundgesendet hat, und wobei ein Auswahlkriterium darin besteht, die Kandidatenteilmenge *S* auszuwählen, die aus den *K* Agenten-Entitäten (300a:300N) mit den größten Werten von *aₙ* besteht;
einen Wert *bₙ*, der eine Zeitdauer darstellt, seit die Agenten-Entität (300n) *n* zuletzt ihren lokalen Modellparametervektor rundgesendet hat, und wobei ein Auswahlkriterium darin besteht, die Kandidatenteilmenge *S* auszuwählen, die aus den *K* Agenten-Entitäten (300a:300N) mit den größten Werten von *bₙ* besteht;
einen Wert *Dₙ*, der eine Datenwichtigkeit des lokalen Modellparametervektors für die Agenten-Entität (300n) *n* darstellt, und wobei ein Auswahlkriterium darin besteht, die Kandidatenteilmenge *S* auszuwählen, die aus den *K* Agenten-Entitäten (300a:300N) mit den größten Werten von *Dₙ* besteht;
einen Wert *Lₙ*, der eine Verfügbarkeit der AgentenEntität (300n) *n* zum Rundsenden ihres lokalen Modellparametervektors darstellt, und wobei ein Auswahlkriterium darin besteht, die Kandidatenteilmenge *S* auszuwählen, die aus den *K* Agenten-Entitäten (300a:300N) mit den größten Werten von *Lₙ* besteht; und
einen Wert *Mₙ*, der eine Nutzenmetrik für die AgentenEntität (300n) *n* darstellt, und wobei ein Auswahlkriterium darin besteht, die Kandidatenteilmenge *S* auszuwählen, die aus den *K* Agenten-Entitäten (300a:300N) mit den größten Werten von *Mₙ* besteht.

4. Verfahren nach der Ansprüche 1 bis 3, wobei die Parameter für die Agenten-Entität (300n) *n* mindestens eines von Folgenden definieren: einen Anbieter der Agenten-Entität (300n) *n*, einen Vertrauenswürdigkeitsgrad der Agenten-Entität (300n) *n*, und wobei ein Auswahlkriterium darin besteht, die Kandidatenteilmenge *S* auszuwählen, die aus den *K* Agenten-Entitäten (300a:300N) von demselben Anbieter mit einem Vertrauenswürdigkeitsgrad über einem Vertrauenswürdigkeitsgradschwellenwert besteht.

5. Verfahren nach einem der vorhergehenden Ansprüche, wobei *K* einen Wert hat, der von der Iterationsrunde des iterativen Lernprozesses abhängt.

6. Verfahren nach einem der vorhergehenden Ansprüche, wobei die ausgewählten *K* Agenten-Entitäten (300a:300N) eine erste Teilmenge von ausgewählten Agenten-Entitäten (300a:300N) bilden und wobei das Verfahren ferner Folgendes umfasst:
Auswählen (S106) von *K'* < *N* weiteren Agenten-Entitäten (300a:300N) zum Rundsenden ihres lokalen Modellparametervektors für die Iteration durch Auswerten des Auswahlkriteriums, wobei die weiteren *K'* Agenten-Entitäten (300a:300N) eine zweite Teilmenge von weiteren ausgewählten Agenten-Entitäten (300a:300N) getrennt von der ersten Teilmenge von ausgewählten Agenten-Entitäten (300a:300N) bilden und wobei die weiteren *K'* Agenten-Entitäten (300a:300N) gemäß einem Interferenzkriterium in Bezug auf die erste Teilmenge von ausgewählten Agenten-Entitäten (300a:300N) ausgewählt werden; und
Senden (S110) von Informationen, die die *N* Agenten-Entitäten (300a:300N) über die weiteren ausgewählten *K'* Agenten-Entitäten (300a:300N) informieren.

7. Verfahren zur Durchführung eines iterativen Lernprozesses,
wobei das Verfahren von einer Agenten-Entität (300n) durchgeführt wird, die Verarbeitungsschaltungsanordnung umfasst,
wobei der iterative Lernprozess eine Rechenaufgabe, die von der Agenten-Entität (300n) durchgeführt werden soll, zum Trainieren eines Modells für maschinelles Lernen betrifft,
wobei für jede Iterationsrunde des iterativen Lernprozesses ein lokaler Modellparametervektor mit lokal berechneten Rechenergebnisses von der AgentenEntität (300n) basierend auf ihren eigenen lokalen Trainingsdaten und mindestens einem lokalen Modellparametervektor berechnet wird, der von anderen Agenten-Entitäten (300a:300N) empfangen wird, wobei jede der anderen Agenten-Entitäten Verarbeitungsschaltungsanordnung umfasst,
wobei die lokal berechneten Rechenergebnisse Aktualisierungen des Modells für maschinelles Lernen sind,
wobei für jede Iterationsrunde des iterativen Lernprozesses die Agenten-Entität (300n) nur ihren lokalen Modellparametervektor rundsenden soll, wenn sie darüber informiert wird, dies zu tun, und
wobei das Verfahren für jede Iteration des iterativen Lernprozesses Folgendes umfasst:
Bereitstellen (S202) von Parametern an eine Koordinator-Entität (200), die Verarbeitungsschaltungsanordnung umfasst,
wobei die Parameter einen Nutzwert für die AgentenEntität (300n) zum Rundsenden ihres lokalen Modellparametervektors für die Iteration betreffen;
wobei die Parameter für die Agenten-Entität (300n) mindestens einen Wert *ζₙ* definieren, der darstellt, wie viele andere der *N* Agenten-Entitäten (300a:300N) eine Rundfunkübertragung von der Agenten-Entität (300n) erreicht;
Empfangen (S204) von Informationen von der Koordinator-Entität (200), die die Agenten-Entität (300n) informieren, welche *K* Agenten-Entitäten (300a:300N) ausgewählt wurden, um ihren lokalen Modellparametervektor für die Iteration rundzusenden; und
Rundsenden (S206) des lokalen Modellparametervektors nur dann, wenn die Agenten-Entität (300n) eine der ausgewählten *K* Agenten-Entitäten (300a:300N) ist.

8. Verfahren nach Anspruch 7, wobei die Parameter für die Agentenentität (300n) eines oder mehrere von Folgenden definieren:
einen Wert *aₙ*, der darstellt, wie viele Iterationen durchgeführt wurden, seit die Agenten-Entität (300n) *n* zuletzt ihren lokalen Modellparametervektor rundgesendet hat;
einen Wert *bₙ*, der eine Zeitdauer darstellt, seit die Agenten-Entität (300n) n zuletzt ihren lokalen Modellparametervektor rundgesendet hat;
einen Wert *Dₙ,* der eine Datenwichtigkeit des lokalen Modellparametervektors für die Agenten-Entität (300n) darstellt;
einen Wert *Lₙ*, der eine Verfügbarkeit der AgentenEntität (300n) zum Rundsenden ihres lokalen Modellparametervektors darstellt; und
einen Wert *Mₙ*, der eine Nutzenmetrik für die AgentenEntität (300n) darstellt.

9. Verfahren nach der Ansprüche 7 bis 8, wobei die Parameter für die Agenten-Entität (300n) mindestens eines von Folgenden definieren: einen Anbieter der Agenten-Entität (300n), einen Vertrauenswürdigkeitsgrad der Agenten-Entität (300n).

10. Verfahren nach einem der vorhergehenden Ansprüche, wobei die Koordinator-Entität (200) in einem Netzwerkknoten (110) vorgesehen ist und jede der Agenten-Entitäten (300a:300N) in einer jeweiligen Benutzereinrichtung (120a:120N) vorgesehen ist.

11. Verfahren nach einem der vorhergehenden Ansprüche, wobei die Agenten-Entitäten (300a:300N) in einer verteilten Rechnerarchitektur (100b, 100c) vorgesehen sind.

12. Koordinator-Entität (200) zum Auswählen von Agenten-Entitäten (300a:300N) zum Rundsenden lokaler Modellparametervektoren in einem iterativen Lernprozess,
wobei der iterative Lernprozess eine Rechenaufgabe, die von *N* Agenten-Entitäten (300a:300N) durchgeführt werden soll, wobei jede Agenten-Entität Verarbeitungsschaltungsanordnung umfasst, zum Trainieren eines Modells für maschinelles Lernen betrifft,
wobei für jede Iterationsrunde des iterativen Lernprozesses ein lokaler Modellparametervektor mit lokal berechneten Rechenergebnissen für jede der *N* Agenten-Entitäten (300a:300N) basierend auf ihren eigenen lokalen Trainingsdaten und mindestens einem lokalen Modellparametervektor berechnet wird, der von mindestens einer anderen der Agenten-Entitäten (300a:300N) empfangen wird,
wobei die lokal berechneten Rechenergebnisse Aktualisierungen des Modells für maschinelles Lernen sind,
wobei für jede Iterationsrunde des iterativen Lernprozesses weniger als alle der *N* Agenten-Entitäten (300a:300N) ihren lokalen Modellparametervektor rundsenden sollen,
wobei die Koordinator-Entität (200) Verarbeitungsschaltungsanordnung (210) umfasst, wobei die Verarbeitungsschaltungsanordnung dazu konfiguriert ist, die Koordinator-Entität (200) für jede Iteration des iterativen Lernprozesses zu Folgendem zu veranlassen:
Erhalten von Parametern von den Agenten-Entitäten (300a:300N), wobei die Parameter einen Nutzwert für jede der Agenten-Entitäten (300a:300N) zum Rundsenden ihres lokalen Modellparametervektors für die Iteration betreffen;
Auswählen von *K* < *N* Agenten-Entitäten (300a:300N) zum Rundsenden ihres lokalen Modellparametervektors für die Iteration durch Anwenden eines Auswahlkriteriums auf die erhaltenen Parameter;
wobei *K* einen Wert hat, der mit zunehmender Iterationsrunde des iterativen Lernprozesses zunimmt, oder wobei die Parameter für eine Agenten-Entität (300n) *n* mindestens einen Wert *ζₙ* definieren, der darstellt, wie viele andere der *N* Agenten-Entitäten (300a:300N) eine Rundfunkübertragung von einer Agenten-Entität (300n) *n* erreicht, und wobei ein Auswahlkriterium darin besteht, die Kandidatenteilmenge *S* auszuwählen, die aus den *K* Agenten-Entitäten (300a:300N) mit den größten Werten von *ζₙ* besteht; und
Senden von Informationen, die die *N* Agenten-Entitäten (300a:300N) über die ausgewählten *K* Agenten-Entitäten (300a:300N) informieren.

13. Koordinator-Entität (200) nach Anspruch 12, die ferner zum Durchführen des Verfahrens nach einem der Ansprüche 2 bis 6 konfiguriert ist.

14. Agenten-Entität (300n) zum Durchführen eines iterativen Lernprozesses,
wobei der iterative Lernprozess eine Rechenaufgabe, die von der Agenten-Entität (300n) durchgeführt werden soll, zum Trainieren eines Modells für maschinelles Lernen betrifft,
wobei für jede Iterationsrunde des iterativen Lernprozesses ein lokaler Modellparametervektor mit lokal berechneten Rechenergebnissen von der *N* AgentenEntität (300n) basierend auf ihren eigenen lokalen Trainingsdaten und mindestens einem lokalen Modellparametervektor berechnet wird, der von anderen Agenten-Entitäten (300a:300N) empfangen wird, wobei jede der anderen Agenten-Entitäten Verarbeitungsschaltungsanordnung umfasst,
wobei die lokal berechneten Rechenergebnisse Aktualisierungen des Modells für maschinelles Lernen sind,
wobei für jede Iterationsrunde des iterativen Lernprozesses die Agenten-Entität (300n) nur ihren lokalen Modellparametervektor rundsenden soll, wenn sie informiert wird, dies zu tun, und
wobei die Agenten-Entität (300n) Verarbeitungsschaltungsanordnung (310) umfasst, wobei die Verarbeitungsschaltungsanordnung dazu konfiguriert ist, die Agenten-Entität (300n) für jede Iteration des iterativen Lernprozesses zu Folgendem zu veranlassen:
Bereitstellen von Parametern an eine Koordinator-Entität (200), die Verarbeitungsschaltungsanordnung umfasst,
wobei die Parameter einen Nutzwert für die AgentenEntität (300n) zum Rundsenden ihres lokalen Modellparametervektors für die Iteration betreffen;
wobei die Parameter für die Agenten-Entität (300n) mindestens einen Wert *ζₙ* definieren, der darstellt, wie viele andere der *N* Agenten-Entitäten (300a:300N) eine Rundfunkübertragung von der Agenten-Entität (300n) erreicht;
Empfangen von Informationen von der Koordinator-Entität (200), die die Agenten-Entität (300n) informieren, welche *K* Agenten-Entitäten (300a:300N) ausgewählt wurden, um ihren lokalen Modellparametervektor für die Iteration rundzusenden; und
Rundsenden des lokalen Modellparametervektors nur dann, wenn die Agenten-Entität (300n) eine der ausgewählten *K* Agenten-Entitäten (300a:300N) ist.

15. Agenten-Entität (300n) nach Anspruch 14, die ferner zum Durchführen des Verfahrens nach einem der Ansprüche 8 bis 11 konfiguriert ist.

## Revendications

1. Procédé de sélection d'entités d'agent (300a:300N) pour diffuser des vecteurs de paramètres de modèle local dans un processus d'apprentissage itératif, dans lequel le procédé est réalisé par une entité coordinatrice (200) qui comprend une circuiterie de traitement,
dans lequel le processus d'apprentissage itératif concerne une tâche de calcul à réaliser par *N* entités d'agent (300a:300N), chaque entité d'agent comprenant une circuiterie de traitement, pour entraîner un modèle d'apprentissage automatique,
dans lequel, à chaque tour d'itération du processus d'apprentissage itératif, un vecteur de paramètres de modèle local avec des résultats de calcul calculés localement est calculé pour chacune des N entités d'agent (300a:300N) sur la base de ses propres données d'entraînement locales et d'au moins un vecteur de paramètres de modèle local reçu depuis au moins une autre des entités d'agent (300a:300N),
dans lequel les résultats de calcul calculés localement sont des mises à jour du modèle d'apprentissage automatique,
dans lequel, à chaque tour d'itération du processus d'apprentissage itératif, moins que toutes les *N* entités d'agent (300a:300N) doivent diffuser leur vecteur de paramètres de modèle local, et
dans lequel le procédé, à chaque itération du processus d'apprentissage itératif, comprend :
l'obtention (S102) de paramètres à partir des entités d'agent (300a:300N), dans lequel les paramètres concernent une utilité pour chacune des entités d'agent (300a:300N) de diffuser son vecteur de paramètres de modèle local pour l'itération ;
la sélection (S104) de *K* < *N* entités d'agent (300a:300N) pour diffuser leur vecteur de paramètres de modèle local pour l'itération par l'application d'un critère de sélection aux paramètres obtenus ;
dans lequel *K* présente une valeur qui augmente avec l'augmentation du tour d'itération du processus d'apprentissage itératif, ou dans lequel les paramètres pour l'entité d'agent (300n) *n* au moins définissent une valeur *ζₙ* représentant le nombre d'autres entités parmi les *N* entités d'agent (300a:300N) qu'une transmission de diffusion depuis l'entité d'agent (300n) *n* atteint, et dans lequel un critère de sélection consiste à sélectionner le sous-ensemble candidat *S* composé des *K* entités d'agent (300a:300N) avec les plus grandes valeurs de *ζₙ* ; et
l'envoi (S108) d'informations qui informent les *N* entités d'agent (300a:300N) des *K* entités d'agent (300a:300N) sélectionnées.

2. Procédé selon la revendication 1, dans lequel les *K* entités d'agent (300a:300N) sont sélectionnées par l'entité coordinatrice (200) évaluant différents sousensembles candidats possibles, chacun d'eux étant composé de *K* entités d'agent (300a:300N), par, pour chaque sous-ensemble candidat, l'évaluation d'une métrique *Uₛ*, dans lequel la métrique *Uₛ* pour un sous-ensemble candidat donné est une fonction des paramètres obtenus pour les *K* entités d'agent (300a:300N) dudit sous-ensemble candidat.

3. Procédé selon la revendication 1 ou 2, dans lequel les paramètres pour l'entité d'agent (300n) *n* définissent une ou plusieurs parmi :
une valeur *aₙ* représentant le nombre d'itérations qui ont été réalisées depuis la dernière diffusion par l'entité d'agent (300n) *n* de son vecteur de paramètres de modèle local, et dans lequel un critère de sélection consiste à sélectionner le sous-ensemble candidat *S* composé des *K* entités d'agent (300a:300N) avec les plus grandes valeurs de *aₙ* ;
une valeur *bₙ* représentant une durée depuis la dernière diffusion par l'entité d'agent (300n) *n* de son vecteur de paramètres de modèle local, et dans lequel un critère de sélection consiste à sélectionner le sous-ensemble candidat *S* composé des *K* entités d'agent (300a:300N) avec les plus grandes valeurs de *bₙ* ;
une valeur *Dₙ* représentant une importance de données du vecteur de paramètres de modèle local pour l'entité d'agent (300n) *n*, et dans lequel un critère de sélection consiste à sélectionner le sous-ensemble candidat *S* composé des *K* entités d'agent (300a:300N) avec les plus grandes valeurs de *Dₙ* ;
une valeur *Lₙ* représentant une disponibilité de l'entité d'agent (300n) *n* pour réaliser la diffusion de son vecteur de paramètres de modèle local, et dans lequel un critère de sélection consiste à sélectionner le sous-ensemble candidat *S* composé des *K* entités d'agent (300a:300N) avec les plus grandes valeurs de *Lₙ* ; et
une valeur *Mₙ* représentant une métrique d'utilité pour l'entité d'agent (300n) *n*, et dans lequel un critère de sélection consiste à sélectionner le sous-ensemble candidat *S* composé des *K* entités d'agent (300a:300N) avec les plus grandes valeurs de *Mₙ.*

4. Procédé selon l'une quelconque des revendications 1 à 3, dans lequel les paramètres pour l'entité d'agent (300n) *n* au moins définissent l'un quelconque parmi : un fournisseur de ladite entité d'agent (300n) *n*, un niveau de confiance de ladite entité d'agent (300n) *n*, et dans lequel un critère de sélection consiste à sélectionner le sous-ensemble candidat *S* composé des *K* entités d'agent (300a:300N) à partir du même fournisseur, présentant un niveau de confiance supérieur à un seuil de niveau de confiance.

5. Procédé selon l'une quelconque des revendications précédentes, dans lequel *K* présente une valeur qui dépend du tour d'itération du processus d'apprentissage itératif.

6. Procédé selon l'une quelconque des revendications précédentes, dans lequel les *K* entités d'agent (300a:300N) sélectionnées constituent un premier sous-ensemble d'entités d'agent (300a:300N) sélectionnées, et dans lequel le procédé comprend en outre :
la sélection (S106) de *K' < N* autres entités d'agent (300a:300N) pour diffuser leur vecteur de paramètres de modèle local pour l'itération par l'évaluation du critère de sélection, dans lequel les *K'* autres entités d'agent (300a:300N) constituent un deuxième sous-ensemble d'autres entités d'agent (300a:300N) sélectionnées disjoint du premier sous-ensemble d'entités d'agent (300a:300N) sélectionnées, et dans lequel les *K'* autres entités d'agent (300a:300N) sont sélectionnées selon un critère d'interférence par rapport au premier sous-ensemble d'entités d'agent (300a:300N) sélectionnées ; et
l'envoi (S110) d'informations qui informent les *N* entités d'agent (300a:300N) des *K'* autres entités d'agent (300a:300N) sélectionnées.

7. Procédé de réalisation d'un processus d'apprentissage itératif,
dans lequel le procédé est réalisé par une entité d'agent (300n) qui comprend une circuiterie de traitement,
dans lequel le processus d'apprentissage itératif concerne une tâche de calcul à réaliser par l'entité d'agent (300n) pour entraîner un modèle d'apprentissage automatique,
dans lequel, à chaque tour d'itération du processus d'apprentissage itératif, un vecteur de paramètres de modèle local avec des résultats de calcul calculés localement est calculé par l'entité d'agent (300n) sur la base de ses propres données d'entraînement locales et de vecteurs de paramètres de modèle local reçus depuis d'autres entités d'agent (300a:300N), chacune des autres entités d'agent comprenant une circuiterie de traitement,
dans lequel les résultats de calcul calculés localement sont des mises à jour du modèle d'apprentissage automatique,
dans lequel, à chaque tour d'itération du processus d'apprentissage itératif, l'entité d'agent (300n) ne doit diffuser son vecteur de paramètres de modèle local que sur instruction, et
dans lequel le procédé, à chaque itération du processus d'apprentissage itératif, comprend :
la fourniture (S202) de paramètres à une entité coordinatrice (200) qui comprend une circuiterie de traitement,
dans lequel les paramètres concernent une utilité pour l'entité d'agent (300n) de diffuser son vecteur de paramètres de modèle local pour l'itération ;
dans lequel les paramètres pour l'entité d'agent (300n) au moins définissent une valeur *ζₙ* représentant le nombre d'autres entités parmi les *N* entités d'agent (300a:300N) qu'une transmission de diffusion depuis l'entité d'agent (300n) atteint ;
la réception (S204) d'informations depuis l'entité coordinatrice (200) qui informent l'entité d'agent (300n) des *K* entités d'agent (300a:300N) qui ont été sélectionnées pour diffuser leur vecteur de paramètres de modèle local pour l'itération ; et
la diffusion (S206) du vecteur de paramètres de modèle local uniquement lorsque l'entité d'agent (300n) est l'une des *K* entités d'agent (300a:300N) sélectionnées.

8. Procédé selon la revendication 7, dans lequel les paramètres pour l'entité d'agent (300n) définissent une ou plusieurs parmi :
une valeur *aₙ* représentant le nombre d'itérations qui ont été réalisées depuis la dernière diffusion par l'entité d'agent (300n) *n* de son vecteur de paramètres de modèle local ;
une valeur *bₙ* représentant une durée depuis la dernière diffusion par l'entité d'agent (300n) de son vecteur de paramètres de modèle local ;
une valeur *Dₙ* représentant une importance de données du vecteur de paramètres de modèle local pour l'entité d'agent (300n) ;
une valeur *Lₙ* représentant une disponibilité de l'entité d'agent (300n) pour réaliser la diffusion de son vecteur de paramètres de modèle local ; et
une valeur *Mₙ* représentant une métrique d'utilité pour l'entité d'agent (300n).

9. Procédé selon l'une quelconque des revendications 7 et 8, dans lequel les paramètres pour l'entité d'agent (300n) au moins définissent l'un quelconque parmi : un fournisseur de l'entité d'agent (300n), un niveau de confiance de l'entité d'agent (300n).

10. Procédé selon l'une quelconque des revendications précédentes, dans lequel l'entité coordinatrice (200) est prévue dans un nœud de réseau (110), et chacune des entités d'agent (300a:300N) est prévue dans un équipement utilisateur (120a:120N) respectif.

11. Procédé selon l'une quelconque des revendications précédentes, dans lequel les entités d'agent (300a:300N) sont prévues dans une architecture informatique distribuée (100b, 100c).

12. Entité coordinatrice (200) destinée à sélectionner des entités d'agent (300a:300N) pour diffuser des vecteurs de paramètres de modèle local dans un processus d'apprentissage itératif,
dans laquelle le processus d'apprentissage itératif concerne une tâche de calcul à réaliser par *N* entités d'agent (300a:300N), chaque entité d'agent comprenant une circuiterie de traitement, pour entraîner un modèle d'apprentissage automatique,
dans laquelle, à chaque tour d'itération du processus d'apprentissage itératif, un vecteur de paramètres de modèle local avec des résultats de calcul calculés localement est calculé pour chacune des N entités d'agent (300a:300N) sur la base de ses propres données d'entraînement locales et d'au moins un vecteur de paramètres de modèle local reçu depuis au moins une autre des entités d'agent (300a:300N),
dans laquelle les résultats de calcul calculés localement sont des mises à jour du modèle d'apprentissage automatique,
dans laquelle, à chaque tour d'itération du processus d'apprentissage itératif, moins que toutes les *N* entités d'agent (300a:300N) doivent diffuser leur vecteur de paramètres de modèle local,
l'entité coordinatrice (200) comprenant une circuiterie de traitement (210), la circuiterie de traitement étant configurée pour amener l'entité coordinatrice (200) à, pour chaque itération du processus d'apprentissage itératif :
obtenir des paramètres à partir des entités d'agent (300a:300N), dans laquelle les paramètres concernent une utilité pour chacune des entités d'agent (300a:300N) de diffuser son vecteur de paramètres de modèle local pour l'itération ;
sélectionner *K* < *N* entités d'agent (300a:300N) pour diffuser leur vecteur de paramètres de modèle local pour l'itération par l'application d'un critère de sélection aux paramètres obtenus ;
dans laquelle *K* présente une valeur qui augmente avec l'augmentation du tour d'itération du processus d'apprentissage itératif, ou dans laquelle les paramètres pour l'entité d'agent (300n) *n* au moins définissent une valeur *ζₙ* représentant le nombre d'autres entités parmi les *N* entités d'agent (300a:300N) qu'une transmission de diffusion depuis l'entité d'agent (300n) *n* atteint, et dans laquelle un critère de sélection consiste à sélectionner le sous-ensemble candidat *S* composé des *K* entités d'agent (300a:300N) avec les plus grandes valeurs de *ζₙ* ; et
envoyer des informations qui informent les N entités d'agent (300a:300N) des '*K* entités d'agent (300a:300N) sélectionnées.

13. Entité coordinatrice (200) selon la revendication 12, étant en outre configurée pour réaliser le procédé selon l'une quelconque des revendications 2 à 6.

14. Entité d'agent (300n) destinée à réaliser un processus d'apprentissage itératif,
dans laquelle le processus d'apprentissage itératif concerne une tâche de calcul à réaliser par l'entité d'agent (300n) pour entraîner un modèle d'apprentissage automatique,
dans laquelle, à chaque tour d'itération du processus d'apprentissage itératif, un vecteur de paramètres de modèle local avec des résultats de calcul calculés localement est calculé par l'entité d'agent (300n) sur la base de ses propres données d'entraînement locales et de vecteurs de paramètres de modèle local reçus depuis d'autres entités d'agent (300a:300N), chacune des autres entités d'agent comprenant une circuiterie de traitement,
dans laquelle les résultats de calcul calculés localement sont des mises à jour du modèle d'apprentissage automatique,
dans laquelle, à chaque tour d'itération du processus d'apprentissage itératif, l'entité d'agent (300n) ne doit diffuser son vecteur de paramètres de modèle local que sur instruction, et
l'entité d'agent (300n) comprenant une circuiterie de traitement (310), la circuiterie de traitement étant configurée pour amener l'entité d'agent (300n) à, à chaque itération du processus d'apprentissage itératif :
fournir des paramètres à une entité coordinatrice (200) qui comprend une circuiterie de traitement,
dans laquelle les paramètres concernent une utilité pour l'entité d'agent (300n) de diffuser son vecteur de paramètres de modèle local pour l'itération ;
dans laquelle les paramètres pour l'entité d'agent (300n) au moins définissent une valeur *ζₙ* représentant le nombre d'autres entités parmi les *N* entités d'agent (300a:300N) qu'une transmission de diffusion depuis l'entité d'agent (300n) atteint ;
recevoir des informations depuis l'entité coordinatrice (200) qui informent l'entité d'agent (300n) des *K* entités d'agent (300a:300N) qui ont été sélectionnées pour diffuser leur vecteur de paramètres de modèle local pour l'itération ; et
diffuser le vecteur de paramètres de modèle local uniquement lorsque l'entité d'agent (300n) est l'une des *K* entités d'agent (300a:300N) sélectionnées.

15. Entité d'agent (300n) selon la revendication 14, étant en outre configurée pour réaliser le procédé selon l'une quelconque des revendications 8 à 11.
